# EUROPEAN PATENT SPECIFICATION

(11) **EP 0 825 359 B1**
(45) Date of publication and mention of the grant of the patent: **03.04.2002**
(21) Application number: 97109238.2
(22) Date of filing: 06.06.1997
(51) Int. Cl.: F16H 3/66, F16D 25/08, F16H 57/02

(54) **Vehicular automatic transmission**
Fahrzeug-Automatikgetriebe
Transmission automatique pour véhicule

(30) Priority: 20.08.1996 JP 23579396
(43) Date of publication of application: 25.02.1998
(73) Proprietor: AISIN AW CO., LTD., Anjo-shi Aichi-ken 444-11 (JP)
(72) Inventor: Taniguchi, Takao, Anjo-shi, Aichi-ken, 444-11 (JP); Miyagawa, Shoichi, Anjo-shi, Aichi-ken, 444-11 (JP); Tsukamoto, Kazumasa, Anjo-shi, Aichi-ken, 444-11 (JP); Hayabuchi, Masahiro, Anjo-shi, Aichi-ken, 444-11 (JP); Nishida, Masaaki, Anjo-shi, Aichi-ken, 444-11 (JP); Kasuya, Satoru, Anjo-shi, Aichi-ken, 444-11 (JP)
(74) Representative: VOSSIUS & PARTNER

(56) References cited:
- EP-A- 0 733 827
- EP-A- 0 733 834
- JP-A- 60 125 444
- PATENT ABSTRACTS OF JAPAN vol. 013, no. 289 (M-845), 5 July 1989 & JP 01 083927 A (AISIN SEIKI CO LTD), 29 March 1989,

## Description

The invention relates to an automatic transmission and, more particularly, to a reaction supporting structure for an automatic transmission, in which input clutches arranged at the two ends of a speed change mechanism are controlled by stationary cylinder irrotational hydraulic servos.

In an automatic transmission to be mounted on a vehicle, the number of gear stages is more increased to improve the running performance of the vehicle. As one of these multistage techniques, there has been disclosed in JP-A-60125444 (1985) which discloses the features of the preamble of claim 1, a technique in which two sets of simple planetary gear sets, as usually required for achieving three forward and one reverse gear stages, are used in a speed change mechanism so that four forward and one reverse gear stages can be established to prevent the automatic transmission from being axially elongated, as might otherwise accompany the multiple stages. This automatic transmission is structured as a transverse engine type automatic transmission in which two input clutches for inputting the power of an engine to two input elements of the speed change mechanism are arranged at the two ends of an input shaft across the speed change mechanism and in which an output gear is arranged at the center of the speed change mechanism.

Generally in the prior art, the hydraulic servos of the clutches of the automatic transmission are given a rotary type cylinder structure in which the cylinder is mounted in the clutch drum. With this structure, the inside of the rotating cylinder is fed with an oil pressure from a stationary member such as a transmission case so that a seal member is required for preventing the oil leakage from the relatively rotating portions of the cylinder and the stationary member. The seal member establishes a dragging loss to lower the transmission efficiency of the automatic transmission. In the rotary type cylinder structure, moreover, a centrifugal oil pressure is built up in the oil by the centrifugal force, as established by the rotation of the cylinder. This makes it necessary to provide a centrifugal oil pressure canceling mechanism thereby to enlarge the size of the system.

In order to eliminate such sliding resistance thereby to prevent the establishment of the centrifugal oil pressure drastically, therefore, it is effective to provide an irrotational stationary cylinder type, in which the cylinders of the hydraulic servos are separated from the clutch drum to apply only the servo forces to a frictional engagement element thereby to apply the engagement element. When this structure is adopted, the cylinder is fixed on an irrotational portion such as the transmission case. If the cylinder is buried in the transmission case, the structure can be made so compact that neither the stationary member nor the cylinder wall itself is required.

In the automatic transmission, however, two or three sets of clutches are usually required in relation to the speed change mechanism. Even in the case of the speed change-mechanism requiring two sets of clutches, these two clutches are not always arranged at the end portions of the speed change mechanism. Despite of the aforementioned advantage, however, there has never been realized in the automatic transmission the structure in which the hydraulic servos of the clutches are made of the stationary cylinder type and buried in the transmission case. Moreover, when the hydraulic servos of the clutches are of the stationary cylinder type, their oil pressures are not balanced in the clutch drum which raise another problem that a reaction receiving structure is required for receiving the hydraulic servo forces.

However, the clutch having the structure, in which the cylinders of the hydraulic servos are buried in the two end walls of the case, has been realized in the prior art in such a torque distribution mechanism in the differential unit of the vehicle as essentially requires the structure in which the clutches are disposed at the final output unit of the mechanism and happen to be arranged symmetrically with respect to the case. These clutches are exemplified by the technique, as disclosed in JP-A- 248721/1990 or JP-A-241287/1994.

It is, therefore, conceivable that the hydraulic servos of the automatic transmission can be buried in the wall of the transmission case if the method of arranging the hydraulic servos of the torque distributing mechanism is applied with the technique of the automatic transmission, in which the input clutches are arranged at the two ends of the speed change mechanism, as disclosed in JP-A- 125444/1985. If, however, the reaction receiving structure in those torque distributing mechanisms is buried, the former is provided with the reaction receiving structure which is disposed at the inner circumferential side of the cylinder and uses a bearing so as to restore the hydraulic servo force at the same case end wall as the buried cylinder. In this arrangement, the cylinder and the bearing are radially overlapped to limit the diameter of the cylinder thereby to enlarge the hydraulic servo diameter. On the other hand, the latter adopts the reaction receiving structure in which a step portion is formed at the radially outer side of the clutch drum and in which the bearing is arranged between the step portion and the inner circumference of the case, so that the hydraulic servo force may be transmitted to the case. If this structure is adopted, the bearing is radially enlarged but can be satisfied when the rotation is at a relatively low circumferential speed equal to that of the rotation of the axle as in the clutch for the torque distribution of the differential unit. If, however, the structure is applied to a portion of relatively high rotation, in which the engine rotation is transmitted substantially as it is, as in the clutch for connecting the input shaft of the automatic transmission and the speed change mechanism, the circumferential speed of the bearing grows so high that the large-sized bearings having a matching load capacity has to be used to retain the durability. Thus, the structure cannot be an effective counter-measure for the compact mechanism in the transmission. So long as the concept of the prior art for receiving the hydraulic servo force at the vicinity of the hydraulic servos is thus followed, it is impossible to realize the effective support of the hydraulic servo force for the automatic transmission.

The invention has been conceived in view of the circumstances thus far described and has the object to achieve such a reaction receiving structure in an automatic transmission having a restricted axial length, e.g., a transverse ending type automatic transmission that the hydraulic servos of input clutches are buried in the walls of a transmission case so as to improve the efficiency and to enhance the compactness and that the axial force, as inevitable because of the adoption of such hydraulic servos, is borne without deteriorating the compactness and durability of the mechanism; and to achieve a reaction receiving structure for transmitting the axial force to the transmission case by dispersing it to the existing individual walls.

Moreover, individual axial forces from mutually influencing upon the axial clutches should be prevented by making the axial force transmitting lines independent of each other.

Next, it should be achieved a reaction receiving structure which minimizes the addition of new bearings for supporting the reaction, by utilizing the position regulating bearings, which exist in the speed change mechanism including a planetary gear, for receiving the reaction.

Next, the degree of freedom for setting the gear ratio of a speed change mechanism from dropping should be prevented by setting the axial force transmitting line suitable for the speed change mechanism.

Next, the position regulating bearings existing in the speed change mechanism effectively as the reaction receiving structure should be utilized by dispersing and arranging the speed change mechanism including the planetary gear between the two end walls and the intermediate wall of the transmission case.

Next, the axial force transmitting line, as formed to correspond to two input clutches, into a line avoiding the high-speed rotating portions of the bearings in accordance with the gear stages is to be achieved by the transmission.

Next, it is to minimize the generation of the gear noise which will follow the formation of the axial force transmitting line through the speed change mechanism including the planetary gear.

Next, the speed change mechanism should be as simple as possible.

Moreover, it is to realize the structure to transmit the axial force of one clutch to the intermediate wall through the speed change mechanism including the planetary gear and the axial force of the other clutch to the end wall through an input shaft, by a simple structure.

Moreover, it is to transmit the axial force, as to be transmitted through the input shaft, to the end walls of the transmission case by the simple structure.

Moreover, it is to make the transmission into a compact structure by rationally causing the end wall of the transmission case to support the input shaft, the cylinders of the hydraulic servos and the reaction receiving bearing.

Moreover, it is to retain the durability of the bearings in the axial force transmitting line passing through the planetary gear in the speed change mechanism.

Moreover, it is to prevent the increase in the number of parts for receiving the reaction by utilizing the support bearings of the output gear of the speed change mechanism in the axial force transmitting line.

Moreover, it is to prevent the drop in the durability of the bearings supporting the output gear by denying the axial force by the thrust force which is generated in the output gear in the speed change mechanism.

Moreover, it is to reduce the facial pressure for the axial force transmission in the axial force transmitting line between the output element of the speed change mechanism and the output gear.

Finally, it is to prevent an offset load by the eccentricity of the support shaft, as caused by the engagement of the band brake with the bearing transmitting the axial force.

These objects are achieved with the features of the claims.

In the invention thus structured; the axial force is transmitted to the wall of the transmission case, as opposed to each hydraulic servo, so that the reaction receiving structure need not be disposed unlike the prior art at the inner circumferential sides of the hydraulic servos. As a result, the effective pressure receiving area of the hydraulic servos can be accordingly enlarged to make the transmission compact. Unlike the reaction receiving structure of the prior art for supporting the outer circumference of the clutch drum, moreover, the diameter of the bearings need not be enlarged so that the drop in the durability of the bearings, as might otherwise be caused by the high circumferential speed, can be prevented.

In an alternative structure in which the opposite walls of the transmission case are the two end walls of the same or one opposite wall is the intermediate wall of the same, the axial forces can be received for the individual cases not by providing a new wall but by making use of the existing walls of the transmission case so that a compact automatic transmission can be provided.

The force to be established by the hydraulic servo, the hydraulic force to be applied to the cylinder itself of the hydraulic servo is applied to the end wall, and the axial force by the servo force transmitted from the input clutch to the reaction member is applied to the intermediate wall. As a result, only the hydraulic force acts upon the two end walls so that the two servo forces are transmitted to the intermediate wall and denied by each other. only one servo force acts at the maximum upon the intermediate wall so that the two axial forces to be generated by the hydraulic servos can be dispersed and received by the individual walls to provide an advantage for retaining the durability. In addition, any new wall need not be formed, but the existing walls can be utilized to receive the axial forces to provide a compact automatic transmission.

In a further alternative structure, a common axial force transmitting line is formed between the two input clutches by the reaction members. When the individual clutches are to be simultaneously applied by the first and second hydraulic servos, the axial forces are denied at least partially by the common axial force transmitting line so that the loads upon the walls, to which the axial force is to be applied, is lightened to take an advantage in the aspect of the durability.

According to the structure as set forth in Claim 2, moreover, when a speed change is made by connecting one clutch and disconnecting the other clutch with the first and second hydraulic servos, the axial forces are transmitted through the independent transmission lines so that the axial forces will not influence upon each other to improve the controllability of the two input clutches.

In an alternative structure in which the common axial force transmitting line passes through the input shaft, the number of reaction members to be interposed between the hydraulic servos and the side walls can be reduced to reduce the dispersion in the application clearances of the input clutches. In addition, the hydraulic servo forces do not act upon the speed change mechanism so that the bearings of the speed change mechanism can avoid becoming large-sized. In addition, the bearings to be added can be limited to those between the input shaft and the end walls.

According to the structure as set forth in Claim 3, moreover, the speed change mechanism is usually provided with thrust bearings for receiving the thrust forces of planetary gears of helical gears. By causing the axial force transmitting line at the side for transmitting the axial force to the intermediate wall to pass through the speed change mechanism, no bearing need to be added, as might otherwise be required by the stationary cylinder type clutch. By causing the side for transmitting the axial force to the end wall to pass through the input shaft, moreover, what is required is to add only one bearing. As a result, the number of bearings to be added can be reduced to make a compact transmission.

According to the structure as set forth in Claim 4, moreover, the axial force of the hydraulic servo at the side of the speed change mechanism is transmitted to the end wall through the input shaft whereas the side for transmitting the axial force to the intermediate wall is not made to pass through the speed change mechanism. This will be reasoned in the following. The speed change mechanism is usually provided with the thrust bearings for receiving the thrust forces of the planetary gears made of helical gears. If the hydraulic servo forces are applied to the speed change mechanism, the thrust bearings are large-sized. If especially the thrust bearing adjacent to the sun gear is large-sized, there arises a problem that the diameters of the sun gears cannot be reduced to lower the degree of freedom of the gear ratio. Thanks to this structure, therefore, it is possible to retain the degree of freedom for setting the gear ratio.

Next, according to the structure as set forth in Claim 5, the speed change mechanisms including the planetary gears are separated and arranged between the intermediate wall and the end walls so that the axial forces can be transmitted to the intermediate wall by utilizing the thrust bearings accompanying the individual planetary gears but not by adding any bearing. As a result, it is possible to make transmission of a compact structure.

According to the structure as set forth in Claim 6, moreover, the transmission loss can be minimized to prevent the drop in the transmission efficiency of the transmission by applying the input clutch at the side through the speed change mechanism at a low gear stage, at which the planetary gears are not rotated at a high speed, and by applying the input clutch at the side through the input shaft at a high gear stage for a high-speed rotation. In addition, the input clutch at the side through the speed change mechanism is applied at the direct-coupled stage, too, but no rolling of the bearings occurs at the direct-coupled stage so that the efficiency will not drop. The reason why these effects can be achieved will be described in the following. The axial force transmitting line through the speed change mechanism passes through many bearings so that the rolling of the high-speed rotating bearing in a high load state under the axial force of the hydraulic servo causes a very high transmission loss. This loss can be avoided by the aforementioned structure.

According to the structure as set forth in Claim 7, moreover, if a high axial force acts upon the line through the speed change mechanism including the planetary gears, a high gear noise may be generated especially at a high gear stage by the distortion of the gears. By then keeping the input clutch at the side through the speed change mechanism away from engagement, the gear noise can be suppressed to a low level. Incidentally, at the direct-coupled stage, the planetary gears are integrally rotated to cause no gear noise so that no problem arises even if the input clutch is applied.

According to the structure as set forth in Claim 8, moreover, thanks to the structure requiring no further clutch, the gear train structure is enabled to maximize the effect of the compactness using the stationary cylinder type hydraulic servos.

According to the structure as set forth in Claim 9, moreover, the structure of Claim 12 can be realized by the extremely simple structure.

According to the structure as set forth in Claim 10, moreover, when the power from the engine is transmitted from the side of the second clutch to the input shaft, the input shaft portion closer to the first hydraulic servo than the flange portion of the clutch side associated with the hydraulic servo does not perform the torque transmission so that it may raise no problem even if it is radially reduced. By making use of this fact, the input shaft portion is radially reduced to form a step portion, and the race of the bearing is made to abut against the step portion. As a result, the axial forces can be transmitted without providing any snap ring thereby to provide a simple structure.

According to the structure as set forth in Claim 11, moreover, the transmission can be given a compact structure by arranging the shaft supporting portion, the cylinder of the first hydraulic servo and the bearing abutment portion rationally without any uselessness.

According to the structure as set forth in Claim 12, moreover, the bearings are the more advantageous for the lower circumferential speed, if the higher load is applied thereto. By transmitting the axial force through the thrust bearings arranged in the same radial positions as those of the sun gears, therefore, the circumferential speed is lowered. As a result, it is possible to retain the durability of the bearings.

According to the structure as set forth in Claim 13, moreover, when the axial force by the servo force of the first hydraulic servo is to be transmitted to the intermediate wall, it is transmitted to the output shaft. By utilizing the bearing indispensable for supporting the output gear in the line for transmitting the axial force, therefore, the number of bearings can be reduced to reduce the number of parts.

According to the structure as set forth in Claim 14, moreover, the thrust forces deny each other so that the thrust force to act upon the bearing for supporting the output gear can be reduced to minimize the drop in the durability of the bearing.

According to the structure as set forth in Claim 15, moreover, the output gear is supported at the outer circumferential side of the cylindrical portion of the intermediate wall so that the connection portion to the output element can be positioned at a relatively outer diametrical side thereby to lower the facial pressure of the connection portion for transmitting the axial force. Since a high drive torque from the speed change mechanism acts upon the connection portion, the load on the connection portion can be minimized by lowering the axial force to prevent the mechanism from becoming large-sized by integrating the torque transmission portion and the axial force transmission portion into one connection portion.

Finally, according to the structure as set forth in Claim 16, the durability of the bearing can be prevented from dropping by not causing the application of the input clutch, as associated with the first hydraulic servo, simultaneously with the time of applying the band brake. This prevention will be reasoned in the following. At the time of applying the band brake, the eccentric load is applied to the band drum. As a result, when the band drum is axially supported, an axial eccentricity may occur to incline the rotary members thereby to cause an offset abutment against the thrust bearing. If, at this time, the input clutch for transmitting the axial force through the speed change mechanism is applied, the offset abutment of the thrust bearing occurs under the action of a high axial force. Thus, the aforementioned prevention can avoid the undesirable matters in the aspect of the durability of the bearing.

The invention will be described with reference to drawings, in which :
Fig. 1 is a schematic diagram showing an automatic transmission according to a first embodiment of the invention;
Fig. 2 is an explanatory diagram showing the symbolized contents of the schematic portion with reference to specific structures;
Fig. 3 is an operation diagram of the automatic transmission of the first embodiment;
Fig. 4 is a schematic diagram of an automatic transmission according to a second embodiment of the invention;
Fig. 5 is a schematic diagram of an automatic transmission according to a third embodiment of the invention;
Fig. 6 is a schematic diagram of an automatic transmission according to a fourth embodiment of the invention;
Fig. 7 is a schematic diagram of an automatic transmission according to a fifth embodiment of the invention;
Fig. 8 is a schematic diagram of an automatic transmission according to a sixth embodiment of the invention;
Fig. 9 is a section of the entirety of the embodiment, as showing a more detailed structure of the automatic transmission according to the sixth embodiment of the invention;
Fig. 10 is a section of a portion, as showing a speed change mechanism portion of Fig. 9 in an enlarged scale;
Fig. 11 is a schematic diagram of an automatic transmission according to a seventh embodiment of the invention;
Fig. 12 is a schematic diagram of an automatic transmission according to an eighth embodiment of the invention;
Fig. 13 is a schematic diagram of an automatic transmission according to a ninth embodiment of the invention;
Fig. 14 is a schematic diagram of an automatic transmission according to a tenth embodiment of the invention;
Fig. 15 is an operation diagram of the automatic transmission of the tenth embodiment;
Fig. 16 is a schematic diagram of an automatic transmission according to an eleventh embodiment of the invention;
Fig. 17 is a schematic diagram of an automatic transmission according to a twelfth embodiment of the invention;
Fig. 18 is a schematic diagram of an automatic transmission according to a thirteenth embodiment of the invention;
Fig. 19 is a schematic diagram of an automatic transmission according to a fourteenth embodiment of the invention;
Fig. 20 is a section showing a clutch structure of the automatic transmission of the fourteenth embodiment;
Fig. 21 is a schematic diagram of an automatic transmission according to a fifteenth embodiment of the invention;
Fig. 22 is a schematic diagram of an automatic transmission according to a sixteenth embodiment of the invention; and
Fig. 23 is a schematic diagram of an automatic transmission according to a seventeenth embodiment of the invention.

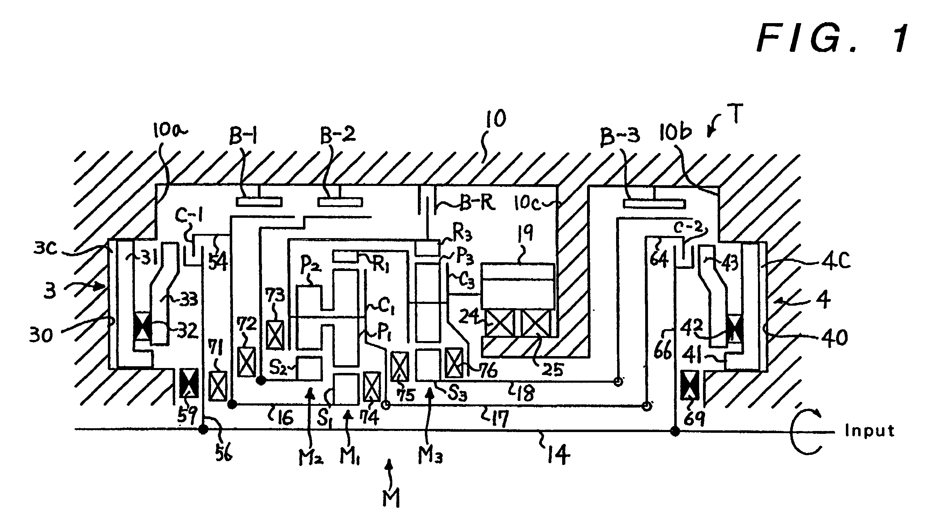

The invention will be described with reference to the accompanying drawings showing a variety of embodiments. First of all, Fig. 1 shows the gear train of an automatic transmission according to the first embodiment. As shown, the automatic transmission T is structured to comprise: a transmission case 10; a speed change mechanism M arranged in the transmission case 10 and including two input elements (i.e., the sun gear S₁ and the carrier C₁ of a first planetary gear set M₁, as will be detailed in the present mode) and one output element (i.e., a carrier C₃ of a third planetary gear set M₃ connected to the ring gear R₁ of the same first planetary gear set M₁); an input shaft 14 extending from one end to the other end of the transmission case 10 through the speed change mechanism M; first and second two input clutches (C-1 and C-2) arranged at two ends across the speed change mechanism M and for connecting/disconnecting the individual input elements S₁ and C₁ to and from the input shaft 14; and two hydraulic servos 3 and 4 for applying/releasing the individual input clutches (C-1 and C-2).

The transmission case 10 has an intermediate wall 10c between its two end walls 10a and 10b. The intermediate wall 10c supports a counter drive gear 19 acting as an output gear through bearings 24 and 25 such as tapered roller bearings or angular ball bearings capable of supporting a thrust force, so that the output rotation can be taken out from between the two input clutches (C-1 and C-2) which are arranged at the two ends across the speed change mechanism M. Between the intermediate wall 10c and one end wall 10a, there is arranged an essential portion of the speed change mechanism M, as including the planetary gear. In this mode, the speed change mechanism M is structured to include three planetary gear sets M₁, M₂ and M₃, four brakes (B-1, B-2, B-3 and B-R), and connection members for connecting them thereby to achieve five forward speeds and one reverse speed.

The two hydraulic servos 3 and 4 are of the stationary cylinder type, whose cylinders 30 and 40 are formed of the two end walls 10a and 10b of the transmission case 10 and which are arranged in association with the individual input clutches (C-1 and C-2). By the actions of the individual hydraulic servos 3 and 4, the axial forces to be applied to the individual input clutches (C-1 and C-2) are transmitted to the opposite walls of the transmission case 10, as opposed to the individual hydraulic servos 3 and 4, by the reaction members which are arranged from the individual input clutches to the opposite walls of the transmission case 10. These walls of the transmission case 10, as opposed to the individual hydraulic servos 3 and 4, are exemplified by the one end wall 10a and the other end wall 10b. In addition, the reaction members are so structured to include the input shaft 14 as to form a common axial force transmitting line between the two input clutches (C-1 and C-2).

Here the individual portions will be detailed. The two hydraulic servos 3 and 4 individually include: the stationary type two cylinders 30 and 40 formed to confront the individual end walls 10a and 10b of the transmission case 10; two pistons 31 and 41 slidably arranged in those cylinders 30 and 40 and associated with the cylinders 30 and 40 for defining oil chambers 3C and 4C to be fed with an oil pressure; and bearings 32 and 42 individually arranged between the pistons 31 and 41 and the first and second clutches (C-1 and C-2) for allowing the relative rotations between the individual pistons 31 and 41 and the first and second clutches (C-1 and C-2) and for transmitting the servo forces from the individual pistons 31 and 41 accompanying the feed of the oil pressure to the first and second clutches (C-1 and C-2).

The input shaft 14 has flange portions 56 and 66 which are arranged adjacent to the first and second clutches (C-1 and C-2) so that the servo forces from the individual pistons 31 and 41 are individually transmitted to the flange portions 56 and 66 through the first and second clutches (C-1 and C-2). These flange portions 56 and 66 are so individually connected to the input shaft 14 as to transmit the servo forces from the pistons 31 and 41. Between the input shaft 14 and the individual end walls 10a and 10b, moreover, there are interposed bearings 59 and 69 for regulating the axial movement of the input shaft, as accompanying the servo forces from the pistons 31 and 41.

Next, the speed change mechanism M is structured of three stages of planetary gear sets M₁, M₂ and M₃, and the brakes (B-1, B-2, B-3 ad B-R) and the clutches (C-1 and C-2) are arranged with those planetary gear sets. The two planetary gear sets M₁ and M₃ are individually composed of sun gears S₁ and S₃, ring gears R₁ and R₃, and the carriers C₁ and C₃ for rotatably bearing pinion gears P₁ and P₃ meshing with them. The planetary gear set M₂ is composed of a sun gear S₂ and a pinion gear P₂ meshing with sun gear S₂ and having a smaller diameter than that of the aforementioned pinion gear P₁. The pinion gear P₂ is rotatably born by the carrier C₁ but irrotationally connected to the pinion gear P₁. The ring gears R₁ and R₃ and the carriers C₃ and C₁ of the individual two planetary gear sets M₁ and M₃ are connected to each other, and the sun gear S₁ and the carrier C₁ of the planetary gear set M₁ are individually connected through the clutches (C-1 and C-2) to the input shaft 14 so that they may act as input elements. The ring gear R₁ and the carrier C₃, as connected to each other, are connected to the counter drive gear 19 acting as an output gear.

Moreover, the sun gear S₁ of the planetary gear set M₁ can be retained on the transmission case 10 by the brake (B-1), and the sun gear S₂ of the planetary gear set M₂ can also be retained on the transmission case 10 by the brake (B-2). The ring gear R₃, as connected to the carrier C₁, can be retained on the transmission case 10 by the brake (B-R). Moreover, the sun gear S₁ is connected to a drum 54 of the clutch (C-1) through a sun gear shaft 16 which is fitted around the input shaft 14. The carrier C₁ is connected to the clutch (C-2) through a carrier shaft 17 which is fitted around the input shaft 14, and the sun gear S₃ is connected to the brake (B-3) through a sun gear shaft 18 which is fitted around the carrier shaft 17. In addition, the individual brakes excepting the brake (B-R) are structured of band brakes whereas the brake (B-R) is structured of multi-disc type or meshing type, although not especially limited thereto.

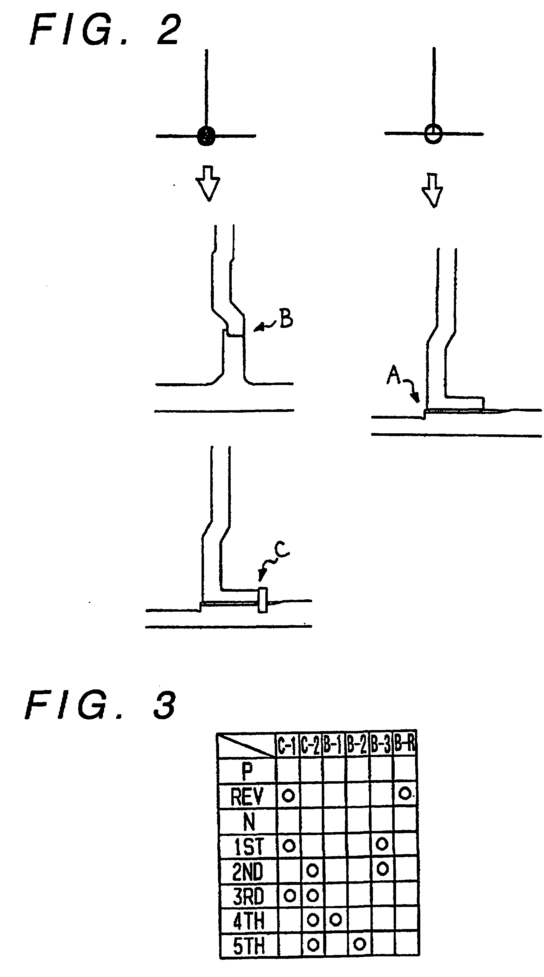

Incidentally, in this speed change mechanism M, individual thrust bearings 71 to 76 are arranged for regulating the gaps between the flange portion 56 and the end of the sun gear shaft 16, between the clutch drum 54 and the sun gear S₂, between the sun gear S₂ and the flange of the carrier C₁, between the carrier C₁ and the sun gear S₃ and between the sun gear S₃ and the flange of the carrier C₃. Here, connection symbols ○ appearing between members indicate connection structures such as splines, as designated by letter A in Fig. 2, which can axially move for transmitting the rotating force. Connection symbols ● indicate either completely fixed connection structures or joint structures, as designated by letter B or C, which are axially immovable in the axial direction to transmit at least the axial force by fitting snap rings on one end of the spline connections. These symbols are likewise applied to the individual embodiments to follow.

The automatic transmission T thus structured achieves individual gear stages by feeding the oil pressure under the control of the not-shown hydraulic control unit to the hydraulic servos which correspond to the individual clutches and brakes, to apply (as indicated by symbols ○) and release (as indicated by blanks) the individual clutches and brakes, as tabulated in the operation diagram of Fig. 3. Specifically, the first speed (1ST) is achieved when the clutch (C-1) and the brake (B-3) are applied. At this time, the rotation of the input shaft 14 enters the sun gear S₁ through the clutch (C-1) so that it is outputted as the rotation of the carrier C₃, which is decelerated the most by the retention of the sun gear S₃ resulting from the engagement of the brake (B-3), to the counter drive gear 19. In addition , the second speed (2ND) is achieved when the clutch (C-2) and the brake (B-3) are applied. At this time, the input rotation, as having entered the carrier shaft 17 through the clutch (C-2), unchangedly enters the ring gear R₃ through the carrier C₁ so that it is outputted as the differential rotation of the carrier C₃, which uses the sun gear S₃ retained by the engagement of the brake (B-3) as a reaction element, to the counter drive gear 19. The third speed (3RD) is achieved when the planetary gear set M₁ is directly coupled by the engagements of the two clutches (C-1 and C-2). At this time, the rotation of the input shaft 14 is outputted as it is, as the rotation of the carrier C₃ to the counter drive gear 19.

The fourth speed (4TH) by the overdrive is achieved when the clutch (C-2) is applied and when the brake (B-1) for retaining the sun gear S₁ is applied. At this time, the rotation of the input shaft 14 is transmitted as the rotation of the ring gear R₁, which is accelerated by the rotation of the pinion gear P₁ on its axis with respect to the rotation of the carrier C₁, from the carrier C₃ to the counter drive gear 19. On the contrary, the fifth speed (5TH) is achieved when the clutch (C-2) and the brake (B-2) are applied. At this time, the rotation of the input shaft 14 is transmitted as the rotation of the ring gear R₁, which is accelerated by the rotation of the pinion gear P₂ on its axis with respect to the rotation of the carrier C₁, from the carrier C₃ to the counter drive gear 19. In this speed, the diameter of sun gear S₂ is larger than that of sun gear S₁, so that the accelerated rotation of the ring gear R₁ is further accelerated than that of the fourth speed.

Incidentally, the reverse (REV) is achieved when the clutch (C-1) and the brake (B-R) are applied. At this time, the decelerated rotation of the ring gear R₁, which is reversed from the input of the sun gear S₁ when the carrier C₁ is retained, is outputted through the carrier C₃ from the counter drive gear 19.

When the two clutches (C-1 and C-2) are fed with the oil pressure from the not-shown in-housing oil passages so that the aforementioned individual gear stages may be achieved, the pistons 31 and 41 are pushed out. Since, however, the bearings 32 and 42 and push members 33 and 43 are interposed between the pistons 31 and 41 and the clutches (C-1 and C-2), the servo forces from the pistons 31 and 41 can be transmitted to the friction discs while allowing the relative rotations between the clutches (C-1 and C-2) and the pistons 31 and 41, so that the clutches (C-1 and C-2) can be applied.

In these operations, the servo force from the piston 31 of the hydraulic servo 3 is transmitted through the bearing 32, the push member 33 and the frictional disc portion of the first clutch (C-1) to the flange portion 56 and further from the flange portion 56 through the input shaft 14 to the other hydraulic servo 4. At the side of the hydraulic servo 4, the thrust bearing 69 is arranged between the input shaft 14 and the case end wall 10b so that the servo force is finally transmitted to the case end wall 10b at the opposite side. Upon the case end wall 10a at the side of the hydraulic servo 3, on the other hand, there acts a hydraulic reaction in the direction opposed to that of the servo force of the piston 31. As a result, the servo force of the piston 31 and the opposite hydraulic force are transmitted to and offset by the two case end walls 10a and 10b, i.e., the transmission case 10. These functions can also be achieved for the other hydraulic servo 4. Thus, in this embodiment, the servo forces from the two pistons 31 and 41 are transmitted through the input shaft 14 to the two case end walls 10a and 10b so that they can exert no influence upon the speed change mechanism. Incidentally, the individual black-inked bearing symbols indicate that the servo forces are applied to the corresponding bearings, as also in the following individual embodiments.

Thus, according to the aforementioned first embodiment, the axial forces are transmitted to the opposite walls 10a and 10b, as opposed to the hydraulic servos, so that no reaction member need to be disposed at the inner circumferential side of the hydraulic servo unlike the prior art. As a result, the hydraulic servo can take a large effective pressure receiving area so that the transmission can be made compact. Unlike the prior art in which the outer circumference of the clutch drum is supported, moreover, the diameter of the bearing need not be enlarged so that the reduction in the durability of the bearing, as might otherwise be caused by the large diameter, can be prevented. Moreover, when the two hydraulic servos 3 and 4 apply the individual input clutches (C-1 and C-2) simultaneously (as for achieving the third speed (3RD) in the present mode), their axial forces are offset to reduce the loads upon the walls 10a and 10b for receiving the axial forces so that an advantage is achieved in the aspect of the durability. Without providing any new wall, still moreover, the axial force can be borne by the existing wall so that the automatic transmission can be made compact. Furthermore, the number of reaction members to be interposed between the hydraulic servos 3 and 4 and the side walls 10a and 10b can be reduced to reduce the dispersion in the application clearances of the input clutches (C-1 and C-2). Furthermore, no hydraulic servo force acts upon the speed change mechanism M so that the bearings of the speed change mechanism M can avoid becoming large-sized. Furthermore, the bearings to be added can be limited to those between the input shaft 14 and the end walls 10a and 10b. Thanks to the structure in which no intermediate clutch is required in addition to the two end input clutches (C-1 and C-2), moreover, the gear train structure can exhibit the most the effect of the compactness using the stationary cylinder type hydraulic servos.

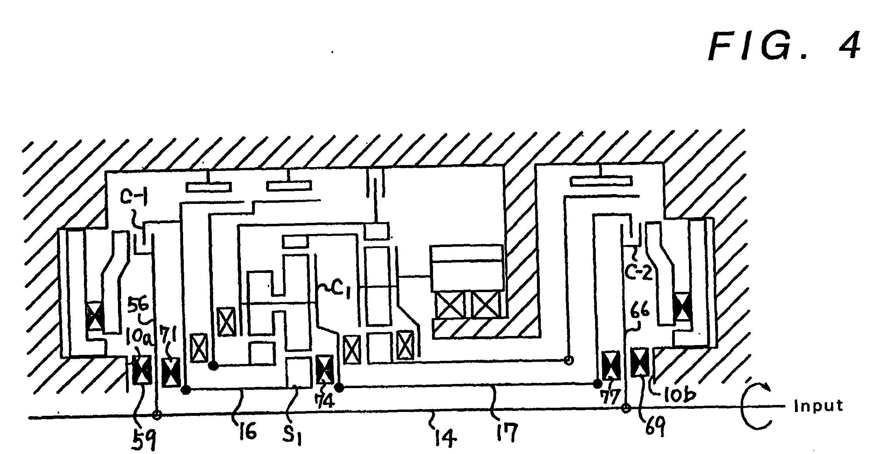

Next, Fig. 4 shows a second embodiment of the invention. This embodiment is similar to the aforementioned first embodiment in that the reaction members structure a common axial power transmitting line between the two input clutches (C-1 and C-2), but is different in that the transmitting line does not pass through the input shaft 14. In this embodiment, therefore, the two flange portions 56 and 66 are so axially movably connected by suitable means such as the spline engagement that no axial force may be exerted upon the input shaft 14. The reaction members in the speed change mechanism M are structured of those bearings 71, 74 and 77 of the bearings in the speed change mechanism, which are located between the flange portion 56 and the end of the sun gear shaft 16, between the sun gear S₁ and the flange of the carrier C₁, and between the end of the carrier shaft 17 and the flange portion 66, the sun gear shaft 16 including the sun gear S₁, and the carrier shaft 17.

With this structure, the servo force to be applied to the clutch (C-1) is borne on the end wall 10b by the axial force transmitting line which follows the flange portion 56, the bearing 71, the sun gear shaft 16 including the sun gear s₁, the bearing 74, the carrier shaft 17, the bearing 77, the flange portion 66 and the thrust bearing 69 in the recited order. The servo force to be applied to the clutch (C-2) is borne on the end wall 10a by the axial force transmitting line following the flange portion 66, the bearing 77, the carrier shaft 17, the bearing 74, the sun gear shaft 16 including the sun gear S₁, the bearing 71, the flange portion 56 and the thrust bearing 59. According to this structure, the effects similar to those of the aforementioned first embodiment can be achieved excepting that the hydraulic servo force acts upon the speed change mechanism M.

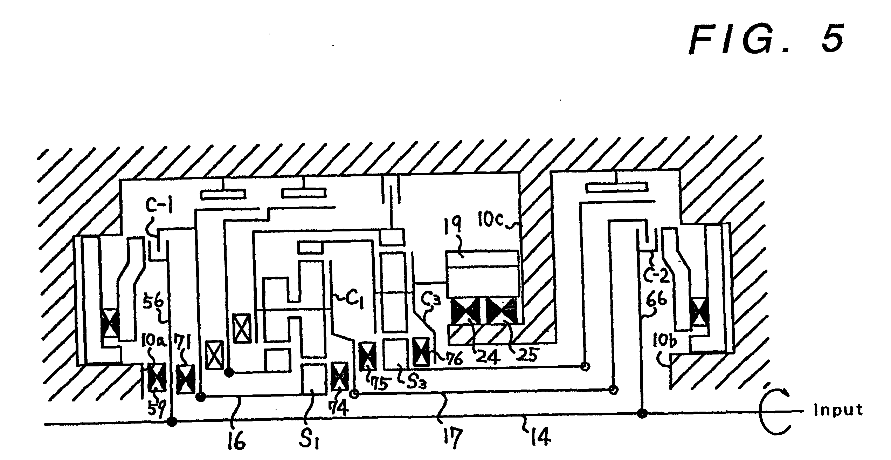

Next, Fig. 5 shows a third embodiment of the invention. This embodiment is similar to the aforementioned first embodiment in that the reaction members form the common axial force transmitting line passing through the input shaft 14 between the two input clutches (C-1 and C-2), but is different in that the axial force of the input clutch (C-1) is transmitted not to the end wall 10b but to the intermediate wall 10c. In this embodiment, therefore, the thrust bearing is eliminated from between the flange portion 66 and the end wall 10b. In this embodiment, moreover, the reaction members are structured of those individual bearings 71, 74, 75 and 76 of the bearings in the speed change mechanism, which are located between the flange portion and the end of the sun gear shaft 16, between the sun gear S₁ and the end of the carrier shaft 17, between the flange of the carrier C₁ and the sun gear S₃ and between the sun gear S₃ and the flange of the carrier C₃, the bearings 24 and 25 supporting the counter drive gear, the sun gear shaft 16 including the sun gear S₁, the sun gear S₃, the flange of the carrier C₃, and the counter drive gear 19.

With this structure, the servo force to be applied to the clutch (C-1) is borne on the intermediate wall 10c by the axial force transmitting line which is composed of the flange portion 56, the bearing 71, the sun gear shaft including the sun gear S₁, the bearing 74, the flange of the carrier C₁, the bearing 75, the sun gear S₃, the bearing 76, the flange of the carrier C₃, the counter drive gear 19, and the support bearings 24 and 25. The servo force to be applied to the clutch (C-2) is borne on the end wall 10a by the axial force transmitting line which is composed of the flange portion 66, the input shaft 14, the flange portion 56, and the thrust bearing 59. The common effect of the case of the axial force transmitting line passing through such speed change mechanism is that the transmission loss can be minimized to prevent the drop in the transmission efficiency, as shown in the operation diagram of Fig. 3, by applying the input clutch (C-1) at the side through the speed change mechanism at the low gear stage (1ST) in which the planetary gears do not rotate at high speeds, and by applying the input clutch (C-2) at the side through the input shaft 14 at the high gear stage (2ND or higher) in which the planetary gears rotate at high speeds. Incidentally, the input clutch (C-1) at the side through the speed change mechanism is applied at the direct-coupled stage (3RD), but the efficiency is not lowered because the bearings do not roll at the direct-coupled stage. Incidentally, the input clutch (C-1) at the side through the speed change mechanism is applied even at the direct-coupled stage (3RD), but the efficiency does not drop at the direct-coupled stage because of no rolling of the bearings.

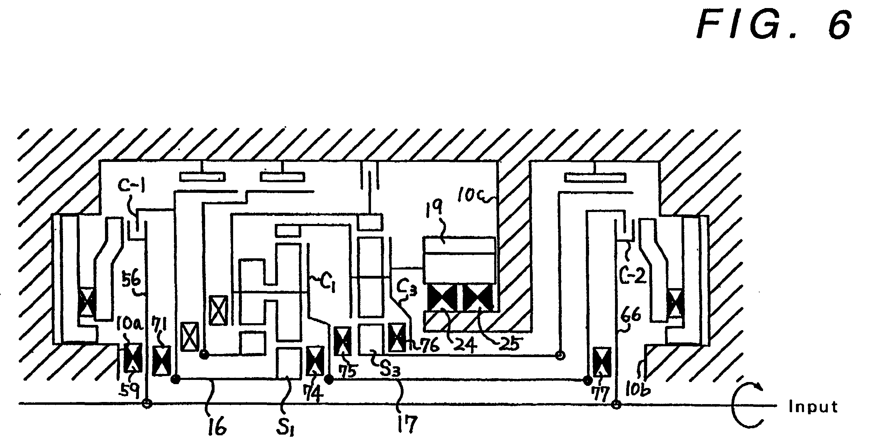

Next, Fig. 6 is a schematic diagram showing a fourth embodiment. This embodiment is similar to the foregoing second embodiment in that the reaction members structure a common axial force transmitting line not through the input shaft 14 between the two input clutches (C-1 and C-2), but is different in that the axial force of the input clutch (C-1) is transmitted to the intermediate wall 10c. In this embodiment, therefore, the thrust bearing is eliminated from between the flange portion 66 and the end wall 10b. In this embodiment, moreover, the reaction members in the speed change mechanism are structured of those bearings 71, 74, 75, 76 and 77 in the bearings of the speed change mechanism, which are located between the flange portion 56 and the end of the sun gear shaft 16, between the sun gear S₁ and the end of the carrier shaft 17, between the flange of the carrier C₁ and the sun gear S₃, between the sun gear S₃ and the flange of the carrier C₃ and between the end of the carrier shaft 17 and the flange portion 66, the two bearings 24 and 25 for supporting the counter drive gear 19, the sun gear shaft 16, the sun gear S₃, the flange of the carrier C₃, the counter drive gear 19 and the carrier shaft 17.

With this structure, the servo force to be applied to the input clutch (C-1) is transmitted to the intermediate wall 10c through a line similar to that of the aforementioned third embodiment of embodiment, and the servo force to be applied to the input clutch (C-2) is transmitted to the end wall 10a through a line similar to that of the foregoing second embodiment. Incidentally, the effects to be obtained by the subsequent individual embodiments including the embodiment are self-explanatory by selecting the effects corresponding to the individual partial structures of the foregoing individual embodiments so that their individual descriptions will be omitted.

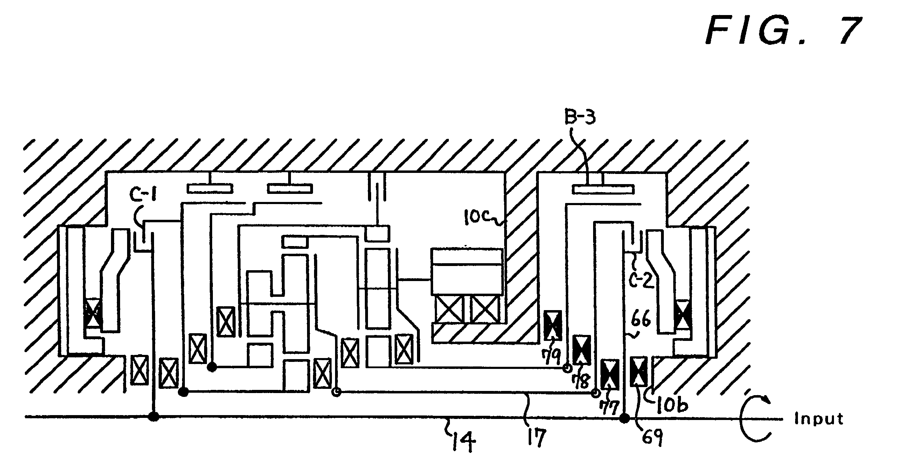

Next, Fig. 7 is a schematic diagram showing a fifth embodiment of the invention. This mode is similar to the foregoing first embodiment in that the reaction members structure the common axial force transmitting line through the input shaft 14 between the two input clutches (C-1 and C-2), but is different in that the axial force of the input clutch (C-2) is transmitted to the intermediate wall 10c. In this embodiment, therefore, bearings 77 to 79 are individually arranged between the flange portion 66 and the end of the carrier shaft 17, between the drum of the clutch (C-2) and the drum of the brake (B-3), and between the drums and the intermediate wall 10c.

With this structure, the servo force to be applied to the input clutch (C-1) is transmitted to the end wall 10b through a line similar to that of the foregoing first embodiment, and the servo force to be applied to the input clutch (C-2) is transmitted to the intermediate wall 10c through a line composed of the flange portion 66, the bearing 77, the drum of the clutch (C-2), the bearing 78, the drum of the brake (B-3) and the bearing 79.

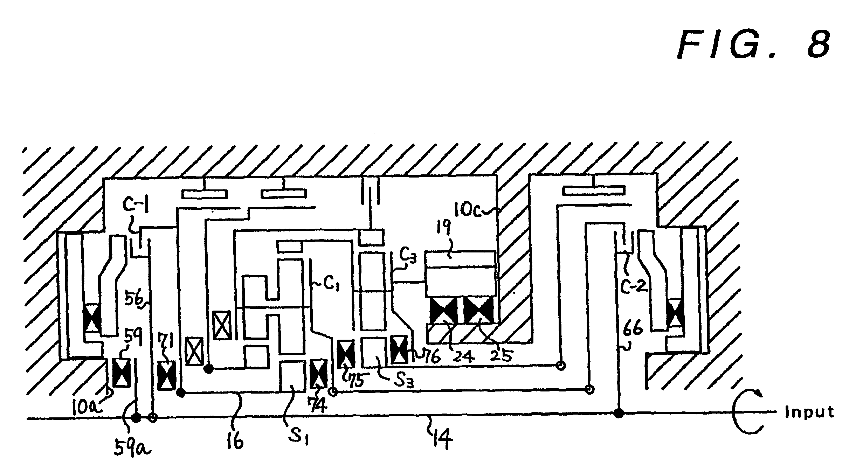

Next, Fig. 8 is a schematic diagram showing a sixth embodiment of the invention. This embodiment is different from the foregoing individual embodiments in that the reaction members structure axial force transmitting lines independent for the two input clutches (C-1 and C-2). For this, the flange portion 56 is made axially movable with respect to the input shaft 14. In place of this, the race 59a of the bearing 59 is axially immovably connected to the input shaft 14. The remaining structures are made substantially similar to these of the foregoing third embodiment.

With this structure, the servo force to be applied to the input clutch (C-1) is transmitted to the intermediate wall 10c through a line similar to that of the foregoing third embodiment, and the servo force to be applied to the input clutch (C-2) is transmitted to the end wall 10a through the race 59a of the bearing 59 and the bearing 59.

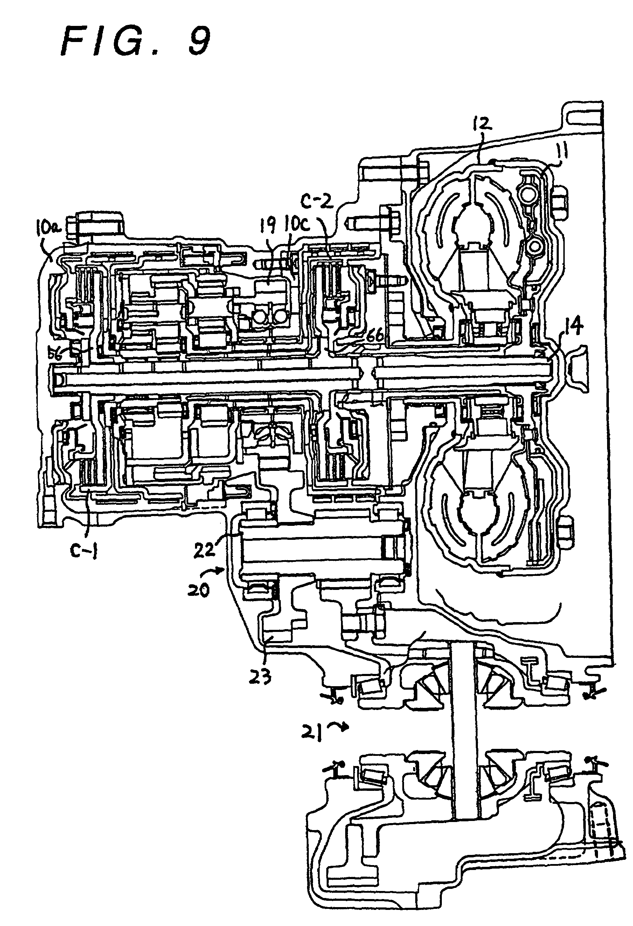

Fig. 9 shows a more detailed embodiment of the automatic transmission according to the foregoing sixth embodiment. As shown in a detailed section, this embodiment is directed to a transfer axle, in which a transverse engine type automatic transmission for a front-engine/front-drive car is combined with a differential unit. This automatic transmission is structured to comprise: a torque converter 12 having a lockup clutch 11 connected to the crankshaft of the not-shown engine; an input shaft 14 integrated with the turbine shaft of the torque converter 12; the speed change mechanism having the aforementioned structure; a counter gear unit 20 including a counter driven gear 23 splined thereto and meshing with a counter drive gear 19 of the speed change mechanism and a counter shaft 22 having an integrated counter gear; and a differential unit 21 having a differential large gear meshing with the counter gear of the counter shaft 22 and fixed on the differential case.

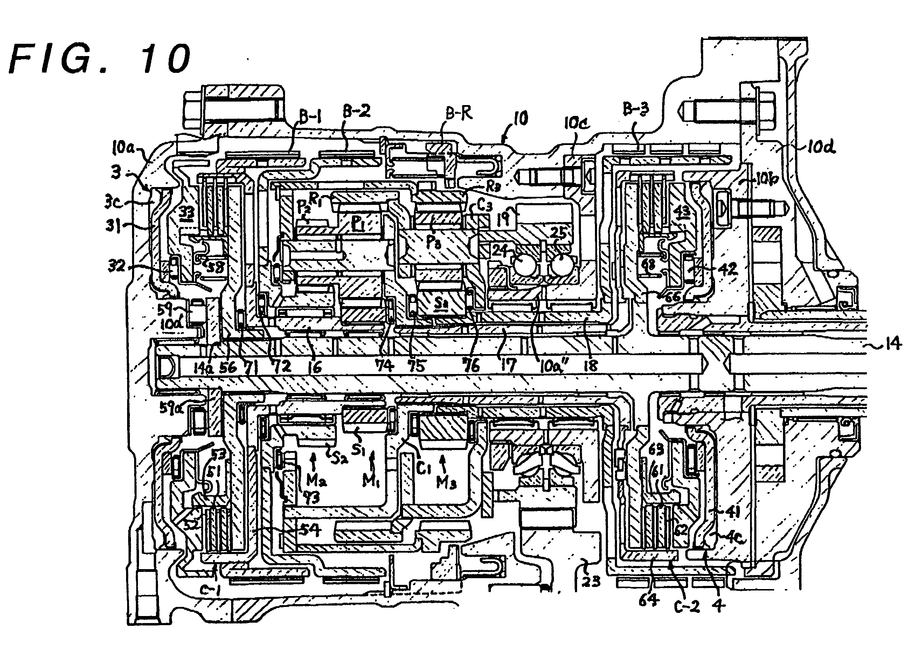

As shown in an enlarged scale in Fig. 10, the transmission case 10 is structured a case body, a cover integrated with one end of the case body by bolts and forming one end wall 10a, and a partition fixed by bolts on a pump case 10d, which is integrated to the other end by bolts, so that it is indirectly fixed on the case body, to form the other end wall 10b. Moreover, the transmission case 10 has an intermediate wall 10c acting as a center support for supporting the output gear 19 which is connected to the carrier C₃ acting as an output element between its two end walls 10a and 10b.

The speed change mechanism is provided with three planetary gear sets M₁, M₂ and M₃. The input shaft 14 extends through the insides of the three planetary gear sets M₁, M₂ and M₃ from one end to the other end of the transmission case 10 such that its one end is supported through a needle bearing by the aforementioned cover whereas its other end is supported through a bushing by a stator support shaft which is fixedly fitted in the inner circumferential portion of the aforementioned partition.

The first and second hydraulic servos and the two input clutches (C-1 and C-2) associated with the former are structured such that the first and second hydraulic servos 3 and 4 are equipped between the bearings 32 and 42 and the input clutches (C-1 and C-2) with the push members 33 and 43, which are relatively irrotationally and axially slidably on the outer circumferences of hubs 53 and 63, and return springs 58 and 68 for applying such individual pushing forces to the pistons 31 and 41 as act against the movements of the pistons 31 and 41 as accompanying the feed of the oil pressure to the oil chambers 3C and 4C. The return springs 58 and 68 individually abut against the push members 33 and 43 and the flange portions 56 and 66 acting as the reaction members.

The push members 33 and 43 confront the bearings 32 and 42 in the inner circumferential portion and the input clutches (C-1 and C-2) in the outer circumferential portion. The push members 33 and 43 are provided at one side of their radially outer side with abutment portions against friction members 52 and 62, and the inner circumferences of the abutment portions are relatively irrotationally and axially slidably splined like separator plates 51 and 61 to the hubs 53 and 63 connected to the input shaft 14.

The two input clutches (C-1 and C-2) are equipped with the hubs 53 and 63, which are individually connected through the flange portions 56 and 66 to the input shaft 14, and drums 54 and 64 which are connected in a driving manner through the sun gear shaft 16-to the sun gear S₁ for one of a plurality of speed change elements, i.e., for the input clutch (C-1) and through the carrier shaft 17 to the carrier C₁ for the input clutch (C-2).

The frictional plate portions of the two input clutches (C-1 and C-2) are composed of a plurality of friction members 52 and 62 having facings adhered to their two faces, and a plurality of separator plates 51 and 61 arranged in the axial direction alternately of the friction members 52 and 62. These friction members 52 and 62 are splined at their outer circumferential sides to the inner circumferences of the drums 54 and 64, and the separator plates 51 and 61 are splined at their inner circumferences to the outer circumferences of the hubs 53 and 63.

In association with the three planetary gear sets M₁, M₂ and M₃, there are arranged in the same radial positions of the sun gears S₁, S₂ and S₃ a plurality of thrust bearings 71, 74, 75 and 76, through which the axial force of the first input clutch (C-1) is transmitted to the intermediate wall 10c. Thanks to this structure, the axial force is transmitted by the thrust bearings, which are arranged in the same radial positions as those of the individual sun gears S₁, S₂ and S₃, thereby to reduce the circumferential speeds of the same. This makes it possible to retain the durability of the bearings.

The speed change mechanism is equipped with the band brakes (B-1 and B-2) for retaining its predetermined rotary elements, i.e., the sun gear S₁ and the sun gear S₂ in the embodiment on the transmission case 10. The drum of the band brake (B-1) is connected to the sun gear shaft 16 and supported by the input shaft 14. The drum of the band brake (B-2) is connected to the sun gear S₂ and supported by the input shaft 14 through the sun gear shaft 16 at the inner circumferential side. The first input clutch (C-1) is applied, as seen with reference to the operation diagram of Fig. 3, only at the gear stages (the reverse (REV), the first speed (1ST), the second speed (2ND) and the third speed (3RD)), in which the band brakes (B-1 and B-2) are not applied. Thus, the drop of the durability of the bearings can be prevented by avoiding the simultaneous engagement of the input clutch (C-1), which is associated with the first hydraulic servo 3, at the engaging time of the band brakes (B-1 and B-2). This will be reasoned in the following. At the engaging time of the band brakes, an eccentric load is applied to the band drums. When the band drums are axially supported, an eccentricity may occur to incline the rotary members thereby to effect eccentric abutments against the thrust bearings 71, 72 and 73. If there is applied the input clutch (C-1) for transmitting the axial force through the speed change mechanism, the eccentric abutment against the thrust bearings will occur under the action of a high servo force. Thus, it is possible to avoid the undesired drop of the durability of the bearings.

In this example, the power to the automatic transmission is transmitted from the side, at which the input clutch (C-2) is arranged, to the input shaft 14 through the torque converter 12 (as shown in Fig. 9). In order to transmit the axial force from the input clutch (C-2) to the end wall 10a, moreover, the input shaft 14 closer to the end wall 10a than the flange portion 56 at the side of the input clutch (C-1) is radially reduced to form a step portion 14a, against which is made to abut against the race 59a of the bearing 59 for transmitting the axial force to the end wall 10a. Thanks to this structure, the axial force can be simply transmitted without providing any snap ring.

In this embodiment, the reaction members receive the axial forces from the individual input clutches (C-1 and C-2) and include the two flange portions for transmitting the rotating force from the input shaft 14 to the individual input clutches (C-1 and C-2). The flange portion 66 at such a side of the input clutch (C-2) that the axial force is transmitted through the input shaft 14 to the end wall 10a is axially immovably fixed on the flange of the input shaft 14 by the welding method. The flange portion at such a side of the input clutch (C-1) that the axial force is transmitted through the speed change mechanism to the intermediate wall 10c is axially movably connected to the input shaft 14 by a spline.

Moreover, the cover forming the end wall 10a is provided with an annular boss portion 10a' for supporting the input shaft 14. The outer circumference of the boss portion 10a' forms the cylinder wall face of the hydraulic servo of the input clutch (C-1), and the end face of the boss portion 10a' forms an abutment portion of the bearing 59 for transmitting the axial force to the end wall 10a. Thanks to this structure, the shaft supporting portion and the cylinder and bearing abutment portions of the first hydraulic servo can be rationally arranged without any useless space to give a compact structure to the transmission.

The center support forming the intermediate wall 10c is made separate of the body of the transmission case 10, and is provided with a radial flange portion extending from the inner circumference of the case body to the vicinity of the outer circumference of the sun gear shaft 18, and a cylindrical portion 10a" extending in the axial direction from one end of the flange portion. The center support is integrated with the body by bolts by bringing the outer circumferential side of the radial flange portion into abutment against the step portion of the inner circumference of the case body. On the outer circumference of the cylindrical portion 10a" of the intermediate wall 10c, there is supported through a pair of angular ball bearings 24 and 25 the counter drive gear 19, which is so engaged with and connected to the output element of the speed change mechanism, i.e., the carrier C₃ at a loose comb-shaped meshing portion in an automatic centering manner as to transmit the axial force from the first input clutch (C-1) to the intermediate wall 10c. Thus, the counter drive gear 19 is supported at the outer circumferential side of the cylindrical portion 10a" of the intermediate wall 10c so that the connected portion to the carrier C₃ can be positioned at a relatively radially outer side thereby to lower the facial pressure to be applied to the connection portion for transmitting the axial force. Since a high drive torque from the speed change mechanism acts upon the connection portion, the load upon the connection portion can be minimized by lowering the axial force so that the torque transmission portion and the axial force transmission portion can be integrated into the connection portion to prevent the mechanism from becoming large-sized.

The counter drive gear 19 is a helical gear having teeth twisted with respect to the axis and in meshing engagement with the counter driven gear 23 made of a similar helical gear. The thrust force, as established at the drive time by the helical gears, is oriented in the direction (i.e., in the leftward direction, as shown) opposing the axial force from the input clutch (C-1). Thanks to this structure, the axial force and the thrust force offset each other so that the thrust force to act upon the bearings 24 and 25 supporting the counter drive gear 19 can be reduced to retain the durability of the bearings.

Thus, according to this embodiment, thanks to the structure in which no clutch other than the two input clutches (C-1 and C-2) is required, despite of the gear train structure of the sixth embodiment capable of achieving the five forward and one reverse stages to maximize the effect of the compactness using the stationary cylinder type hydraulic servo, there can be further the specific effects corresponding to the aforementioned individual detailed structures.

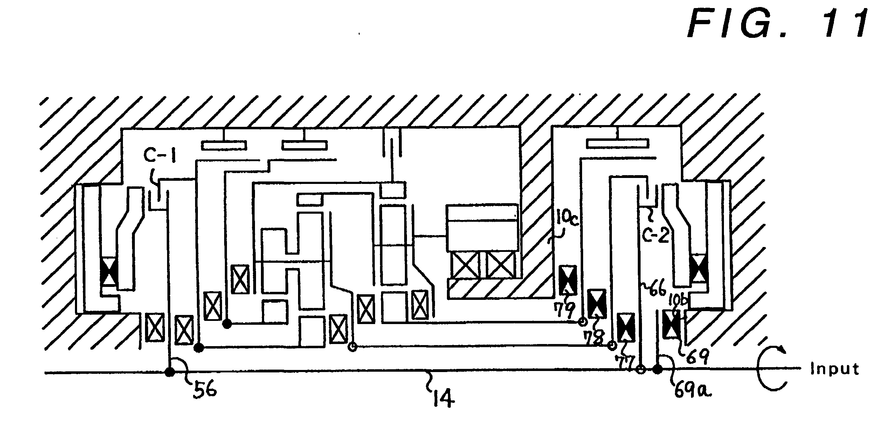

Next, Fig. 11 is a schematic diagram showing a seventh embodiment of the invention. In this embodiment, as in the aforementioned sixth embodiment, the reaction members form independent axial force transmitting lines for the individual two input clutches (C-1 and C-2), and the relations between the two input clutches (C-1 and C-2) and the opposed walls are reversed from those of the sixth embodiment so that the axial force of the input clutch (C-1) may be transmitted to the end wall 10b whereas the axial force of the input clutch (C-2) may be transmitted to the intermediate wall 10c. For this, in this embodiment, the flange portion 66 is axially movably connected to the input shaft 14, but the race 69a of the bearing 69 is axially immovably connected to the input shaft 14. The remaining structures are made substantially similar to those of the foregoing fifth embodiment.

With this structure, the servo force to be applied to the input clutch (C-1) is transmitted to the end wall 10b through the flange portion 56, the input shaft 14, the race 69a and the bearing 69, and the servo force to be applied to the input clutch (C-2) is transmitted to the intermediate wall 10c through the flange portion 66, the bearing 77, the drum of the clutch (C-2), the bearing 78, the drum of the brake (B-3) and the bearing 79.

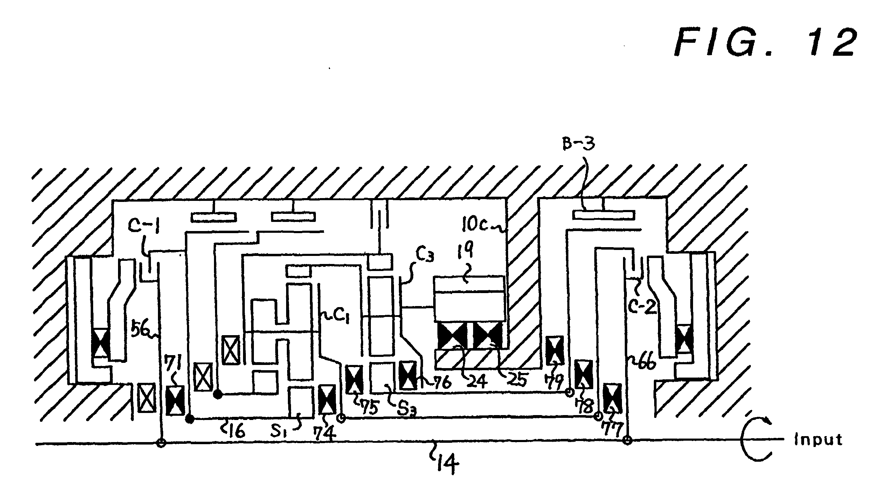

Next, Fig. 12 is a schematic diagram showing an eighth embodiment of the invention. In this embodiment, the reaction members form independent axial force transmitting lines for the individual two input clutches (C-1 and C-2), and the walls confronting the two input clutches (C-1 and C-2) are the intermediate wall 10c. In this embodiment, therefore, the two flange portions 56 and 66 are axially movably connected to the input shaft 14, and the individual bearings are arranged as in the fifth embodiment.

With this structure, the servo force to be applied to the input clutch (C-1) is transmitted to the intermediate wall 10c through the flange portion 56, the bearing 71, the sun gear shaft 16 including the sun gear S₁, the bearing 74, the flange of the carrier C₁, the bearing 75, the sun gear S₃, the bearing 76, the flange of the carrier C₃, the counter drive gear 19 and the bearings 24 and 25. The servo force to be applied to the input clutch (C-2) is transmitted to the intermediate wall 10c through the flange portion 66, the bearing 77, the drum of the clutch (C-2), the bearing 78, the drum of the brake (B-3) and the bearing 79.

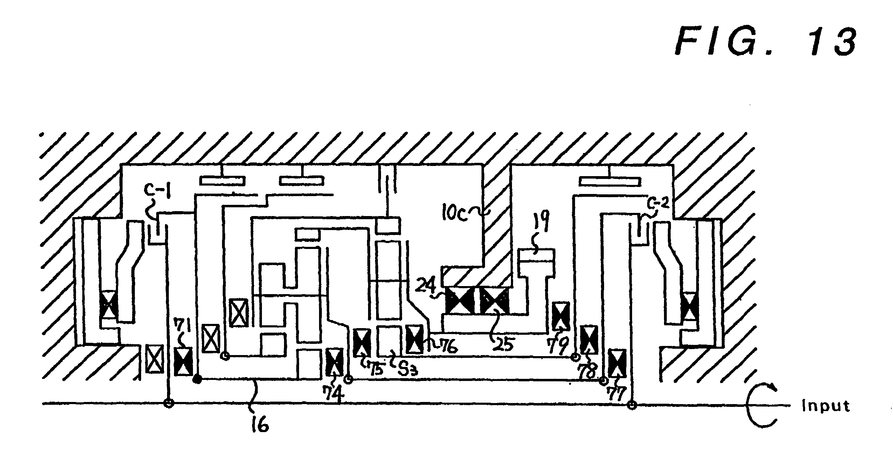

Next, Fig. 13 is a schematic diagram showing a ninth embodiment of the invention. This embodiment is substantially similar to the eighth embodiment, excepting that the axial force transmitting line is partially modified according to the change in the support structure of the counter drive gear to the intermediate wall 10c. In this embodiment, the counter drive gear 19 is supported through the bearings 24 and 25 on the inner circumference of the cylindrical portion of the intermediate wall 10c. In accordance with this, the bearing 79 is held in abutment against the end face of the counter drive gear 19.

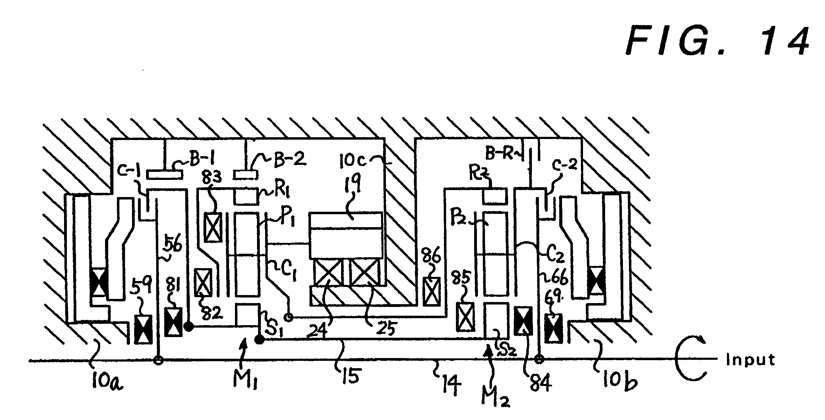

Next, Fig. 14 is a schematic diagram showing a tenth embodiment of the invention. This embodiment is different from the foregoing individual embodiments in the structure of the speed change mechanism and in the arrangement of the same in the case. The speed change mechanism is structured by dispersing and arranging the planetary gear set M₁, which is composed of three elements, i.e., the sun gear S₁, the ring gear R₁ and the pinion gear P₁ meshing with the former, and the planetary gear set M₂, which is composed of three elements, i.e., the sun gear S₂, the ring gear R₂ and the pinion gear P₂ meshing with the former, between the end wall 10a and the intermediate wall 10c and between the intermediate wall 10c and the end wall 10b of the transmission case 10. The sun gear S₁ and the sun gear S₂ are connected to each other through a sun gear shaft 15; the carrier C₁ supporting the pinion gear P₁ is connected to the ring gear R₂; the sun gear S₁ and a carrier C₂ supporting the pinion gear P₂ can be connected/disconnected to and from the input shaft 14, respectively, through the clutch (C-1) and the clutch (C-2); and the carrier C₁ is connected to the counter drive gear 19. Moreover: the sun gear S₁ can be retained on the transmission case 10 by the band brake (B-1) engaging with the drum of the clutch (C-1) connected thereto; the carrier C₂ can be retained on the transmission case 10 by the multi-disc brake (B-R) engaging with the drum of the clutch (C-2) connected thereto; and the ring gear R₁ can be retained on the transmission case 10 by the band brake (B-2).

In this speed change mechanism, at the side of the planetary gear set M₁, there are arranged a thrust bearing 82 between the axially movable flange portion and the axial extension end of the sun gear S₁ and a thrust bearing 83 between the drum of the brake (B-2) and the flange of the carrier C₁. At the side of the planetary gear set M₂, there are arranged a thrust bearing 84 between the axially movable flange portion 66 and the sun gear S₂, a thrust bearing 85 between the sun gear S₂ and the ring gear carrier connecting member, and a thrust bearing 86 between the ring gear carrier connecting member and the intermediate wall 10c.

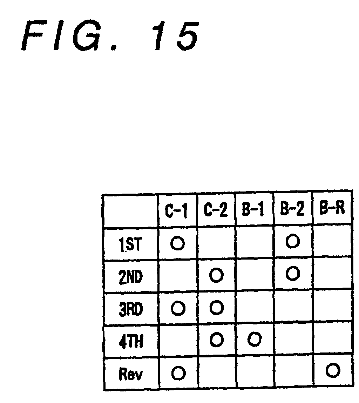

The transmission thus structured achieves the individual gear stages by feeding the oil pressure to the hydraulic servos corresponding to the individual clutches and brakes under the control of the not-shown hydraulic control unit, and by applying (as indicated by symbols ○) and releasing (as indicated by blanks) the individual clutches and brakes, as operationally tabulated in Fig. 15. Specifically, the first speed (1ST) is achieved when the clutch (C-1) and the brake (B-2) are applied. At this time, the rotation of the input shaft 14 enters the sun gear S₁ through the clutch (C-1) so that it is outputted as the rotation of the carrier C₁, which is the most decelerated from the rotation of the pinion gear P₁ by the retention of the ring gear R₁ as a result of the engagement of the brake (B-2), to the counter drive gear 19. On the other hand, the second speed (2ND) is achieved when the clutch (C-2) and the brake (B-2) are applied. At this time, the input, as having entered the carrier C₂ through the clutch (C-2), is outputted as the differential rotation of the carrier C₁, as exemplifying the reaction element by the ring gear R₁ retained by the engagement of the brake (B-2), to the counter drive gear 19. The third speed (3RD) is achieved by the direct-coupling of the planetary gear set M₂, as caused by the engagements of the two input clutches (C-1 and C-2). At this time, the rotation of the input shaft 14 is unchangedly outputted as the rotation of the carrier C₁ to the counter drive gear 19.

The fourth speed (4TH) by the overdrive is achieved by applying the clutch (C-2) and by applying the brake (B-1) for retaining the two sun gears S₁ and S₂. At this time, the rotation of the input shaft 14 is outputted as the rotation of the ring gear R₂, which is accelerated by the rotation of the pinion gear P₂ on its axis with respect to the rotation of the carrier C₂, from the carrier C₁ to the counter drive gear 19.

Incidentally, the reverse (REV) is achieved by applying the clutch (C-1) and the brake (B-R). At this time, the rotation of the ring gear R₂, which is reversed and decelerated by the retention of the carrier C₂ from the input of the sun gear S₂, is outputted from the counter drive gear 19 through the carrier C₁.

In this embodiment, the servo force to be applied to the input clutch (C-1) is transmitted to the end wall 10b through the flange portion 56, the bearing 81, the sun gear S₁, the sun gear shaft 15 including the sun gear S₂, the bearing 84 and the flange portion 66, and the servo force to be applied to the input clutch (C-2) is transmitted from the flange portion 66 through the reversed line and to the end wall 10b through the bearing 59. According to this embodiment, moreover, advantages similar to those of the foregoing second embodiment are achieved.

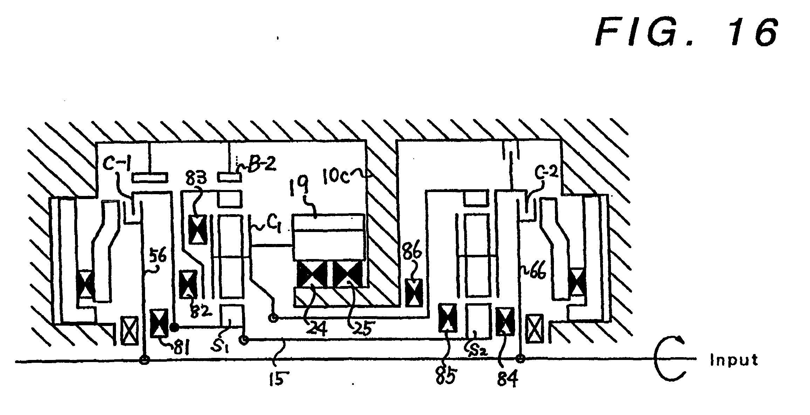

Next, Fig. 16 is a schematic diagram showing an eleventh mode of embodiment of the invention. In this mode, the speed change mechanism is structured like the aforementioned tenth mode of embodiment such that the individual servo forces to be applied to the input clutches (C-1 and C-2) are independently transmitted to the intermediate wall 10c. In accordance with this change, the connection between the sun gear S₁ and the sun gear shaft 15 is changed into an axially movable connection structure.

With this structure, too, the servo force to be applied to the input clutch (C-1) is transmitted through the flange portion 56, the bearing 81, the drum of the clutch (C-1) axially immovably connected to the sun gear S₁, the bearing 82, the drum of the brake (B-2), the bearing 83, the flange of the carrier C₁, and the counter drive gear 19 in the recited order and finally to the intermediate wall 10c through the paired bearings 24 and 25 supporting the counter drive gear 19. In addition, the servo force to be applied to the input clutch (C-2) is transmitted to the intermediate wall 10c through the flange portion 66, the bearing 84, the sun gear S₂, the bearing 85 and the carrier ring gear connection member and further through the bearing 86. According to this embodiment, moreover, advantages similar to those obtained from the foregoing eighth embodiment can be obtained.

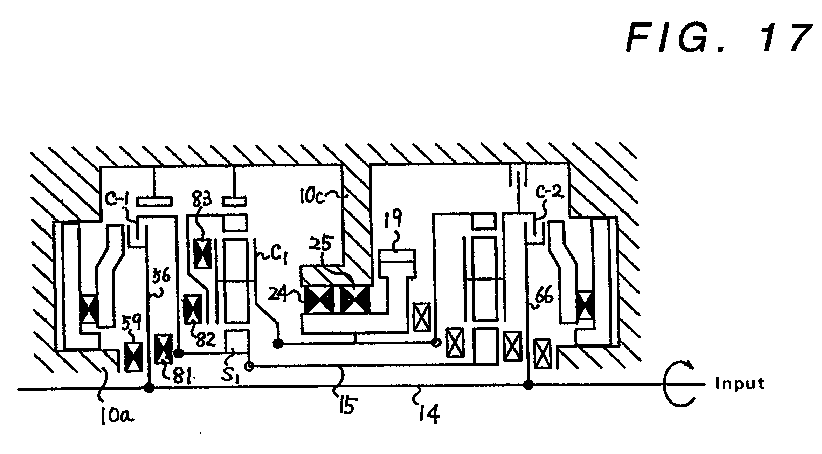

Next, Fig. 17 shows a twelfth embodiment of the invention. This embodiment is similar as to the speed change mechanism to the foregoing tenth embodiment in that the individual servo forces to be applied to the input clutches (C-1 and C-2) are commonly applied through the input shaft 14, but in that one of the servo forces is transmitted to the end wall 10a whereas the other is transmitted to the intermediate wall 10c. In this embodiment, moreover, the counter drive gear 19 is supported at the inner circumferential side of the cylindrical portion of the intermediate wall 10c through the paired support bearings 24 and 25. As compared with the foregoing tenth embodiment, therefore: the two flange portions 56 and 66 are axially immovably connected to the input shaft; the connection between the sun gear S₁ and the sun gear shaft 15 is changed to an axially movable one; and the carrier C₁ is axially immovably connected to the counter drive gear 19 through the carrier ring gear connection member.

With this structure, this embodiment is different from the aforementioned eleventh embodiment in that the force to be applied to the input clutch (C-1) is transmitted midway from the flange of the carrier C₁ through the carrier ring gear connection member to the counter drive gear 19. In addition, the servo force to be applied to the input clutch (C-2) is transmitted to the end wall 10a through the flange portion 66, the input shaft 14 and the flange portion 56 and further through the bearing 59. According to this embodiment, moreover, advantages similar to those obtained from the foregoing third embodiment can be obtained.

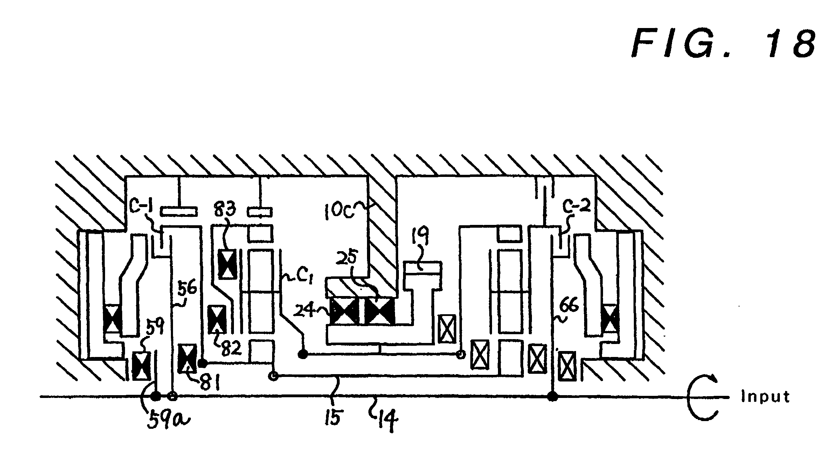

Next, Fig. 18 shows a thirteenth embodiment of the invention. In this embodiment, the speed change mechanism is modified from one similar to that foregoing tenth embodiment such that an axial force transmitting line similar to that of the foregoing sixth embodiment. As apparent from Fig. 8, the race 59a of the bearing 59 is axially immovably connected to the input shaft 14, and the connection between the flange portion 56 and the input shaft 14 is changed to an axially movable one. The structure of the remaining portions is substantially similar to that of the aforementioned twelfth embodiment, and the description of the same will be omitted-by designating the equivalent portions by the identical reference numerals. Moreover, the transmission of the axial forces is similar to the aforementioned twelfth embodiment in the servo force to be applied to the input clutch (C-1) but is different only in that the servo force to be applied to the input clutch (C-2) is transmitted through the bearing race 59a in place of the flange portion 56. According to this embodiment, moreover, advantages similar to those obtained from the foregoing sixth embodiment can be obtained.

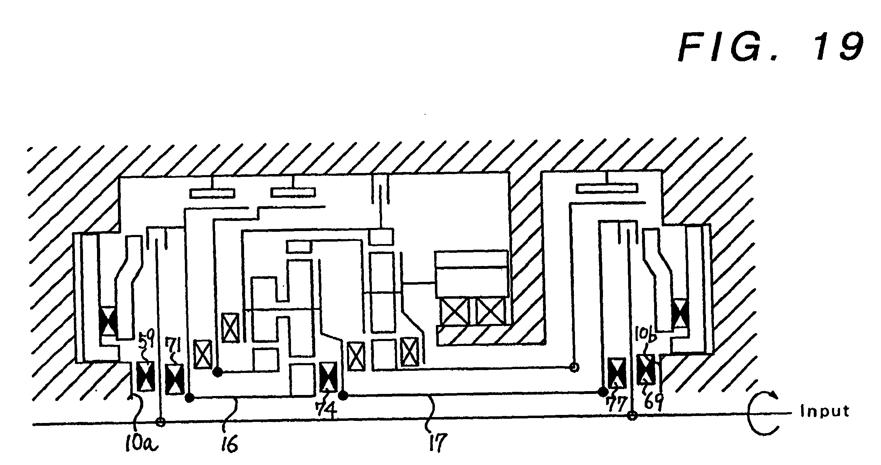

Next, Fig. 19 shows a fourteenth embodiment of the invention. This embodiment is substantially similar to the foregoing second embodiment. In all the foregoing embodiments, the axial force by the servo force is applied to the input member side (i.e., hub side) of the input clutch, but the input clutches (C-1 and C-2) of the following individual embodiments including the mode of embodiment are different only in that the axial force is applied to the output member side (i.e., drum side) of thereof.

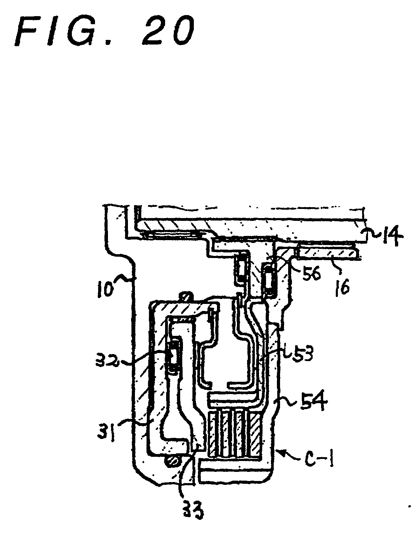

Fig. 20 shows a specific example of the clutch mechanism of the type in which the servo force is applied to such clutches. Fig. 20 shows an example at the side of the clutch (C-1), the hub 53 of which is connected through the flange portion 56 to the input shaft 14 and the drum 54 of which is connected to the sun gear shaft 16. The description of the remaining structure will be omitted by designating the members substantially corresponding to those of the foregoing embodiment shown in Fig. 10, by similar reference numerals. Incidentally, the clutch mechanism of the clutch (C-2) is also structured symmetrically with respect to the shown one as in the foregoing embodiment shown in Fig. 10.

Reverting to the fourteenth embodiment of Fig. 19, even with the input clutch of this type, an axial force transmitting line similar to that of the second embodiment is formed without changing the connection relations of the individual members and the bearing arrangement. In the initial transmitting line, however, the servo forces are transmitted not through the individual flange portions 56 and 66 but directly to the shaft ends of the sun gear shaft 16 and the carrier shaft 17.

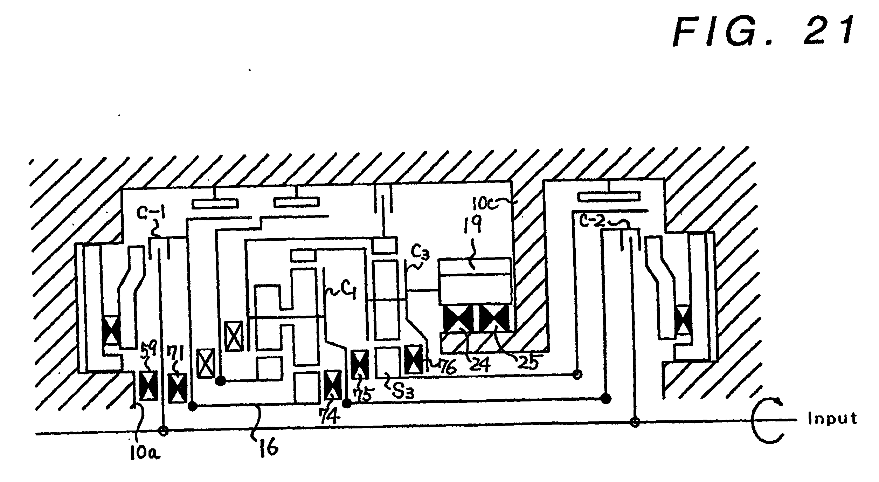

Next, Fig. 21 shows a fifteenth embodiment of the invention. This embodiment is also of the type in which the servo force is applied to the drum side of the clutch, and the servo force of the input clutch (C-1) is applied to the intermediate wall 10c whereas the servo force of the input clutch (C-2) is applied to the end wall 10a. As seen from a comparison with the foregoing fourth embodiment, in this case, the servo force of the input clutch (C-2) is transmitted, as described above, not through the flange portion 66 so that no support member corresponding to the bearing 77 in the fourth embodiment is required.

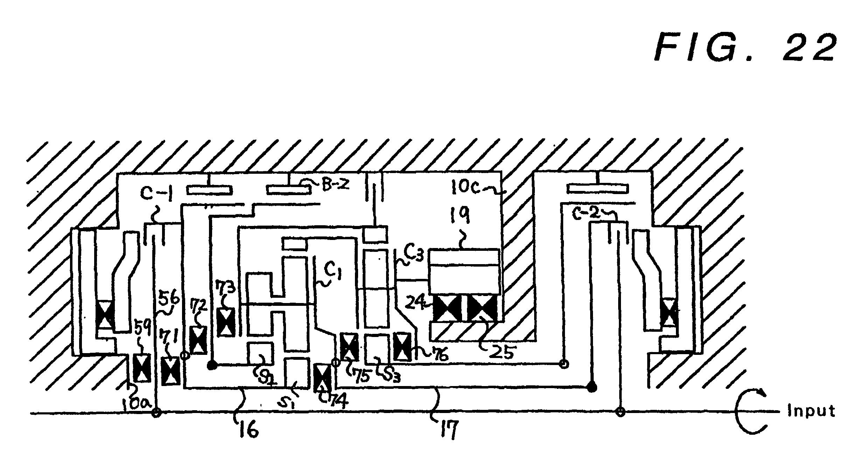

Next, Fig. 22 shows a sixteenth embodiment of the invention. This embodiment is also of the type in which the servo force is applied to the drum side of the clutch so that the servo force of the input clutch (C-1) is applied to the intermediate wall 10c whereas the servo force of the input clutch (C-2) is applied to the end wall 10a, but is different in that these transmitting lines are independent of each other. In this case, the difference in the structure from the aforementioned fifteenth embodiment is that the drum of the clutch (C-1) and the sun gear shaft 16 are axially movably connected across the bearing 71 and the bearing 72, and that the flange of the carrier C₁ and the carrier shaft 17 are axially movably connected across the bearing 74 and the bearing 75.

With this structure, the servo force to be applied to the input clutch (C-1) is transmitted from the drum of the clutch (C-1) to the intermediate wall 10c through the bearing 72, the drum of the brake (B-2), the bearing 73, the carrier C₁, the bearing 75, the sun gear S₃, the bearing 76, the flange of the carrier C₃, the counter drive gear 19 and the two bearings 24 and 25. On the other hand, the servo force to be applied to the input clutch (C-2) is transmitted from the drum of the clutch (C-2) to the end wall 10a through the carrier shaft 17, the bearing 74, the sun gear shaft 16, the bearing 71, the flange portion 56 and the bearing 59.

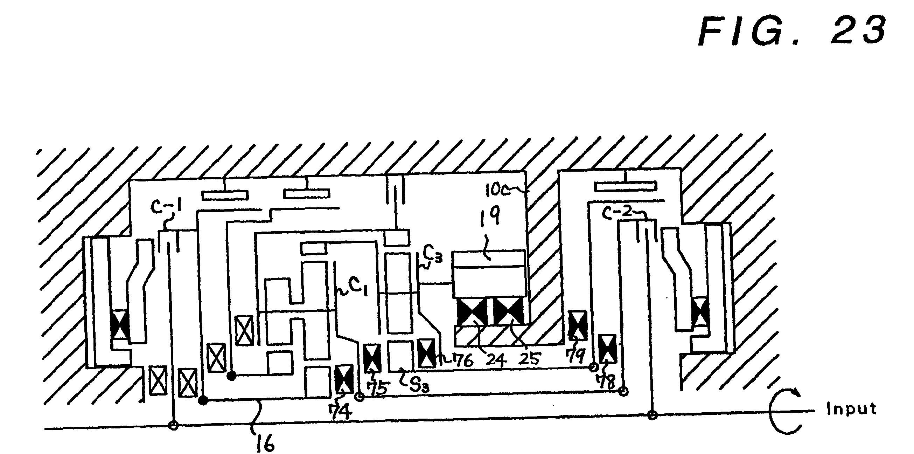

Finally, Fig. 23 is a schematic diagram showing a seventeenth embodiment of the invention. This embodiment is also of the type in which the servo force is applied to the drum side of the clutch, such that the servo forces of the two input clutches (C-1 and C-2) are applied to the intermediate wall 10c independently of each other. This embodiment is similar to the foregoing eighth embodiment in that the servo force is applied to the drum side but is different in that the member corresponding to the bearing 77 can be dispensed with. In this case, too, the servo forces to the sun gear shaft 16 and the bearing 78 are transmitted in the initial transmitting line directly through the individual flange portions 56 and 66.

In short, no matter what of the speed change mechanisms M of the foregoing embodiments might be adopted, the hydraulic servos 3 and 4 of the two input clutches (C-1 and C-2) are of the stationary cylinder type requiring no centrifugal oil pressure offsetting chamber, and the clutch mechanism can be structured at the two ends of the speed change mechanism M and in a smaller space than that of the ordinary rotary servo type by arranging the case end walls 10a and 10b as the cylinders, so that a compact and highly efficient automatic transmission can be structured. Incidentally, the structure in which the hydraulic servos 3 and 4 are disposed at the case end walls 10a and 10b is advantageous for arranging the band brakes on the outer circumferences of the planetary gears and on the outer circumferences of the clutches.

The speed change mechanisms of two different kinds have been described with reference to the seventeen kinds of embodiments to which are applied the reaction receiving structure according to the invention in the various embodiments. Despite of this description, however, the invention should not be applied to the reaction receiving structures, as exemplified in the foregoing embodiments, but could be applied widely to a variety of speed change mechanisms by changing the specific structure in various manners within the scope of the Invention as defined by the claims.

## Claims

1. A vehicular automatic transmission (T) comprising:
a transmission case (10);
a speed change mechanism (M) arranged in the transmission case (10) and including two input elements (S₁, C₁) and one output element (C₃);
an input shaft (14) extending from one end to the other of the transmission case (10) through the speed change mechanism (M);
first and second two input clutches (C-₁, C-₂) arranged at the two ends across the speed change mechanism (M) for connecting/disconnecting the individual input elements (S₁, C₁) of the same to and from the input shaft (14); and
two hydraulic servos (3, 4) for applying/releasing the individual input clutches (C-1, C-2); **characterised in that**
the two hydraulic servos (3, 4) are of the stationary cylinder type (30, 40), the cylinders of which are formed at the two end walls (10a, 10b) of the transmission case (10) and arranged in association with the individual input clutches (C-1, C-2),
the axial forces to be applied to the individual input clutches by the actions of the individual hydraulic servos are transmitted to the opposite walls of the transmission case (10), as opposed to the individual hydraulic servos, by reaction members which are arranged from the individual input clutches (C-1, C-2) to the opposite walls of the transmission case (10), and
the transmission case (10) has an intermediate wall (10c) between the two end walls (10a, 10b) for supporting an output gear (19), connected to the output element (C₃),
wherein the opposite wall of the transmission case (10), as opposed to each hydraulic servo, is the intermediate wall (10c) of the transmission case, and
wherein the reaction members form axial force transmitting lines for individually transmitting the axial forces to the intermediate wall (10c) of the transmission case.

2. An automatic transmission according to claim 1,
wherein the reaction members form axial force transmitting lines independent of each other for the individual input clutches (C-1, C-2).

3. An automatic transmission according to Claim 1 or 2,
wherein the speed change mechanism (M) including a planetary gear is arranged between the intermediate wall (10c) and the one end wall,
wherein the reaction members include the speed change mechanism (M) and the input shaft (14), and
wherein the axial force is transmitted from the first input clutch (C-1) to the intermediate wall (10c) through the speed change mechanism (M) including the planetary gear and from the second input clutch (C-2) to the end wall through the input shaft (14).

4. An automatic transmission according to Claim 1 or 2,
wherein the speed change mechanism (M) including a planetary gear is arranged between the intermediate wall (10c) and the one end wall,
wherein the reaction members include the input shaft (14), and
wherein the axial force is transmitted from the second input clutch (C-2) to the intermediate wall (10c) not through the speed change mechanism (M) and from the first input clutch (C-1) to the end wall through the input shaft (14).

5. An automatic transmission according to claim 1 or 2,
wherein the speed change mechanisms (M) individually including planetary gears are separately arranged between the intermediate wall (10c) and the one end wall (10a) and between the intermediate wall (10c) and the other end wall (10b),
wherein the reaction members include the speed change mechanisms (M), and
wherein the axial force is transmitted to the intermediate wall (10c) through the speed change mechanisms (M) individually including the planetary gears.

6. An automatic transmission according to claim 3,
wherein the first input clutch (C-1) is applied at a low gear stage and/or a direct-coupled stage whereas the second input clutch (C-2) is applied at a high gear stage.

7. An automatic transmission according to claim 3,
wherein the first input clutch (C-1) is applied only for establishing a low gear stage and/or a direct-coupled stage.

8. An automatic transmission according to any of the preceding claims,
wherein the speed change mechanism (M) is a gear train for establishing all the forward gear stages including the reverse gear stage by only the first and second two input clutches (C-1, C-2).

9. An automatic transmission according to claim 3,
wherein the reaction members include two flange portions (56, 66) for receiving the axial forces from the individual input clutches (C-1, C-2) and for transmitting the rotating force from the input shaft (14) to the individual input clutches (C-1, C-2), and
wherein the flange portion (66) at the side of the second input clutch (C-2), at which the axial force is transmitted through the input shaft (14) to the end wall (10a), is made axially immovable with respect to the input shaft (14) whereas the flange portion (56) at the side of the first input clutch (C-1), at which the axial force is transmitted through the speed change mechanism (M) to the intermediate wall (10c), is axially movably connected to the input shaft (14).

10. An automatic transmission according to Claim 9,
wherein the power to the automatic transmission is transmitted from the side, at which the second input clutch (C-2) is arranged, to the input shaft (14), and
wherein in order to transmit the axial force from the second input clutch (C-2), the input shaft (14) at the side closer to the end wall (10a) than the flange portion (56) of the first input clutch (C-1) is radially reduced to form a step portion (14a) so that the race (59a) of the bearing (59) for transmitting the axial force to the end wall (10a) is held in abutment against the step portion (14a).

11. An automatic transmission according to any of claims 1 to 10,
wherein the power to the automatic transmission (T) is transmitted from the side, at which the second input clutch (C-2) is arranged, to the input shaft (14), and
wherein the end wall (10a) has an annular boss portion (10a') for supporting the input shaft (14) so that the outer circumference of the boss portion (10a') provides a cylinder wall face of the hydraulic servo of the first input clutch (C-1) whereas the end face of the boss portion (10a') provides abutment portion of the bearing (59) for transmitting the axial force to the end wall (10a).

12. An automatic transmission according to any of claims 1 to 11,
wherein the speed change mechanism (M) includes a plurality of planetary gears so that a plurality of thrust bearings are disposed in the same radial positions as those of the sun gears (S1, S2, S3) of the planetary gears (M1, M2, M3), and
wherein the axial force of the first input clutch (C-1) is transmitted through the thrust bearings to the intermediate wall (10c).

13. An automatic transmission according to any of claims 1 to 12,
wherein the output gear (19) is supported on the intermediate wall (10c) through the bearing, and
wherein the output gear is so connected to the output element of the speed change mechanism (M) that the axial force from the first input clutch (C-1) can be transmitted to the intermediate wall (10c).

14. An automatic transmission according to claim 13,
wherein the output gear (19) is made of a helical gear so that the direction of a thrust force to be established at the drive time by the helical gear is set to the direction against the axial force from the first input clutch (C-1).

15. An automatic transmission according to claim 13 or 14,
wherein the intermediate wall (10c) has a cylindrical portion (10a") extending in the axial direction and supporting the output gear (19) on its outer circumference.

16. An automatic transmission according to any one of claims 3 to 15,
wherein the speed change mechanism (M)includes a band brake for retaining a predetermined one of its rotary elements on the transmission case (10),
wherein the drum of the band brake is axially supported by the input shaft (14), and
wherein the first input clutch (C-1) is applied only at a gear stage at which the band brake is not applied.

## Patentansprüche

1. Fahrzeug-Automatikgetriebe (T) mit:
einem Getriebegehäuse (10);
einem Gangwechselmechanismus (M), der in dem Getriebegehäuse (10) angeordnet ist und zwei Eingangselemente (S₁, C₁) und ein Ausgangselement (C₃) umfaßt;
einer Eingangswelle (14), welche sich von einem Ende zu dem anderen des Getriebegehäuses (10) durch den Gangwechselmechanismus (M) hindurch erstreckt;
ersten und zweiten Eingangskupplungen (C-1, C-2) welche an den zwei Enden quer zu dem Gangwechselmechanismus (M) angeordnet sind, um die einzelnen Eingangselemente (S₁, C₁) desselben mit und von der Eingangswelle (14) zu verbinden/trennen; und
zwei Hydraulikservos (3, 4) zum Betätigen/Lösen der einzelnen Kupplungen (C-1, (C-2); **dadurch gekennzeichnet, daß**
die zwei Hydraulikservos (3, 4) Typen mit feststehendem Zylindern (30, 40) sind, deren Zylinder an den zwei Endwänden (10a, 10b) des Getriebegehäuses (10) ausgebildet und in Zuordnung zu den einzelnen Eingangskupplungen (C-1, C-2) angeordnet sind,
wobei die auf die einzelnen Eingangskupplungen durch Aktionen der einzelnen Servos auszuübenden Axialkräfte auf die gegenüberliegenden Wände des Getriebegehäuses (10) gegensätzlich zu den einzelnen Hydraulikservos durch Gegenkraftelemente zu übertragen sind, welche von den einzelnen Eingangskupplungen (C-1, C-2) zu den gegenüberliegenden Wänden des Getriebegehäuses (10) angeordnet sind, und
das Getriebegehäuse (10) eine Zwischenwand (10c) zwischen den zwei Endwänden (10a, 10b) für die Unterstützung eines Ausgangsgetrieberades (19) aufweist, welches mit dem Ausgangselement (C₃) verbunden ist
wobei die gegenüberliegende Wand des Getriebegehäuses (10) im Gegensatz zu dem jeweiligen Hydraulikservo die Zwischenwand (10c) des Getriebegehäuses ist, und
wobei die Gegenkraftelemente Axialkraftübertragungslinien ausbilden, um einzeln die Axialkräfte auf die Zwischenwand (10c) des Getriebegehäuses zu übertragen.

2. Automatikgetriebe nach Anspruch 1,
wobei die Gegenkraftelemente Axialkraftübertragungslinien unabhängig voneinander für die einzelnen Eingangskupplungen (C-1, C-2) ausbilden.

3. Automatikgetriebe nach Anspruch 1 oder 2,
wobei der ein Planetengetriebe umfassende Gangwechselmechanismus (M) zwischen der Zwischenwand (10c) und der einen Endwand angeordnet ist,
wobei die Gegenkraftelemente den Gangwechselmechanismus (M) und die Eingangswelle (14) umfassen, und
wobei die Axialkraft von der ersten Eingangskupplung (C-1) auf die Zwischenwand (10c) über den das Planetengetriebe umfassenden Gangwechselmechanismus (M) und von der zweiten Kupplung (C-2) auf die Endwand über die Eingangswelle (14) übertragen wird.

4. Automatikgetriebe nach Anspruch 1 oder 2,
wobei der ein Planetengetriebe umfassende Gangwechselmechanismus (M) zwischen der Zwischenwand (10c) und der einen Endwand angeordnet ist,
wobei die Gegenkraftelemente die Eingangswelle (14) umfassen, und
wobei die Axialkraft von der zweiten Eingangskupplung (C-2) an die Zwischenwand (10c) nicht über den Gangwechselmechanismus (M) übertragen wird und aus der ersten Eingangskupplung (C-1) auf die Endwand über die Eingangswelle (14) übertragen wird.

5. Automatikgetriebe nach Anspruch 1 oder 2,
wobei die jeweils Planetengetriebe enthaltenden Gangwechselmechanismen (M) getrennt zwischen der Zwischenwand (10c) und der einen Endwand (10a) und zwischen der Zwischenwand (10c) und der anderen Endwand (10b) angeordnet sind,
wobei die Gegenkraftelemente den Gangwechselmechanismus (M) umfassen, und
wobei die Axialkraft auf die Zwischenwand (10c) über die jeweils Planetengetriebe umfassende Gangwechselmechanismen (M) übertragen wird.

6. Automatikgetriebe nach Anspruch 3,
wobei die erste Eingangskupplung (C-1) bei einer niedrigen Gangstufe und/oder eine direkt gekoppelten Gangstufe betätigt wird, während die zweite Eingangskupplung (C-2) bei einer hohen Gangstufe betätigt wird.

7. Automatikgetriebe nach Anspruch 3,
wobei die Eingangskupplung (C-1) nur für die Erzielung einer niedrigen Gangstufe und/oder einer direkt gekoppelten Gangstufe betätigt wird.

8. Automatikgetriebe nach einem der vorstehenden Ansprüche,
wobei der Gangwechselmechanismus (M) ein Zahnradsatz für die Erzielung aller Vorwärtsgänge einschließlich des Rückwärtsganges nur durch die ersten und zweiten Eingangskupplungen (C-1, C-2) ist.

9. Automatikgetriebe nach Anspruch 3,
wobei die Gegenkraftelemente zwei Flanschabschnitte (56, 66) für die Aufnahme von axialen Kräften aus den einzelnen Eingangskupplungen (C-1, C-2) und zum Übertragen der Rotationskraft aus der Eingangswelle (14) auf die einzelnen Eingangskupplungen (C-1, C-2) umfassen; und
wobei der Flanschabschnitt (66) an der Seite der zweiten Eingangskupplung (C-2), bei welcher die Axialkraft über die Eingangswelle (14) auf die Endwand (10a) übertragen wird, axial unbeweglich im Bezug auf die Eingangswelle (14) ausgeführt ist, während die Flanschabschnitte (56) an der Seite der ersten Eingangskupplung (C-1), bei welcher die Axialkraft über den Gangwechselmechanismus (M) auf die Zwischenwand (10c) übertragen wird, axial beweglich mit der Eingangswelle (14) verbunden ist.

10. Automatikgetriebe nach Anspruch 9,
wobei die Kraft im Automatikgetriebe von der Seite, bei welcher die zweite Eingangskupplung (C-2) angeordnet ist, der Eingangswelle (14) zugeführt wird, und
wobei für die Übertragung der Axialkraft von der zweiten Eingangskupplung (C-2) die Eingangswelle (14) an der Seite näher an der Endwand (10a) als der Flanschabschnitt (56) der ersten Eingangskupplung (C-1) radial verkleinert ist, um einen Stufenabschnitt (14a) auszubilden, so daß der Laufring (59a) des Lagers (59) für die Übertragung der Axialkraft auf die Endwand (10a) gegen den Stufenabschnitt (14a) anliegend gehalten wird.

11. Automatikgetriebe nach einem der Ansprüche 1 bis 10,
wobei die Kraft dem Automatikgetriebe (T) von der Seite, an welcher die zweite Eingangskupplung (C-2) angeordnet ist, der Eingangswelle (14) zugeführt wird, und
wobei die Endwand (10a) einen ringförmigen Vorsprungabschnitt (10a') für die Unterstützung der Eingangswelle (14) so aufweist, daß der Außenumfang des Vorsprungabschnittes (10a') eine Zylinderwandfläche für den Hydraulikservo der ersten Eingangskupplung (C-1) bereitstellt, während die Endfläche des Vorsprungabschnittes (10a') einen Anlageabschnitt des Lagers (59) für die Übertragung der Axialkraft auf die Endwand (10a) bereitstellt.

12. Automatikgetriebe nach einem der Ansprüche 1 bis 11,
wobei der Gangwechselmechanismus (M) mehrere Planetengetriebe enthält, so daß mehrere Drucklager in denselben radialen Positionen wie denjenigen der Sonnenräder (S₁, S₂, S₃) der Planetengetriebe (M₁, M₂, M₃) angeordnet sind, und
wobei die Axialkraft der ersten Eingangskupplung(C-1) über die Drucklager auf die Zwischenwand (10c) übertragen wird.

13. Automatikgetriebe nach einem der Ansprüche 1 bis 12,
wobei das Ausgangsgetrieberad (19) auf der Zwischenwand (10c) durch das Lager gelagert ist, und
wobei das Ausgangsgetrieberad so mit dem Ausgangselement des Gangwechselmechanismus (M) verbunden ist, daß die Axialkraft von der ersten Eingangskupplung (C-1) auf die Zwischenwand (10c) übertragen werden kann.

14. Automatikgetriebe nach Anspruch .13,
wobei das Ausgangsgetrieberad (19) aus einem Schrägzahnrad besteht, so daß eine zum Antriebszeitpunkt von dem Schrägzahnrad aufzubauende Druckkraft in der Richtung gegen die Axialkraft von der Eingangskupplung (C-1) eingestellt ist.

15. Automatikgetriebe nach Anspruch 13 oder 14,
wobei die Zwischenwand (10c) einen zylindrischen Abschnitt (10a") aufweist, welcher sich in der axialen Richtung erstreckt und das Ausgangsgetrieberad (19) an dessen Außenumfang lagert.

16. Automatikgetriebe nach einem der Ansprüche 3 bis 15,
wobei der Gangwechselmechanismus (M) eine Bandbremse zum Festhalten eines vorbestimmten seiner Rotationselemente an dem Getriebegehäuse (10) aufweist,
wobei die Trommel der Bandbremse axial von der Eingangswelle (14) gelagert wird, und
wobei die erste Eingangskupplung (C-1) nur in einer Gangstufe betätigt wird, bei welcher die Bandbremse nicht betätigt ist.

## Revendications

1. Transmission automatique (T) pour véhicule, comprenant :
un carter (10) de transmission;
un mécanisme de changement de vitesses (M) disposé dans le carter (10) de transmission et comportant deux éléments d'entrée (S₁, C₁) et un élément de sortie (C₃);
un arbre d'entrée (14) s'étendant d'une extrémité à l'autre du carter (10) de transmission à travers le mécanisme de changement de vitesses (M);
un premier et un second embrayage d'entrée (C-1, C-2) disposés en travers des deux extrémités du mécanisme de changement de vitesses (M) pour connecter/déconnecter les éléments d'entrée individuels (S₁, C₁) de ce dernier à l'arbre d'entrée (14); et
deux servomécanismes hydrauliques (3, 4) pour appliquer/relâcher les embrayages d'entrée individuels (C-1, C-2);
**caractérisée en ce que**
les deux servomécanismes hydrauliques (3, 4) sont du type à cylindre fixe (30, 40), dont les cylindres sont formés au niveau des deux parois d'extrémité (10a, 10b) du carter (10) de transmission et agencés en association avec les embrayages d'entrée individuels (C-1, C-2),
les forces axiales à appliquer aux embrayages d'entrée individuels par les actions des servomécanismes hydrauliques individuels sont transmises aux parois opposées du carter (10) de transmission, opposées aux servomécanismes hydrauliques individuels, par des éléments de réaction qui vont des embrayages d'entrée individuels (C-1, C-2) aux parois opposées du carter (10) de transmission, et
le carter (10) de transmission comporte une paroi intermédiaire (10c) entre les deux parois d'extrémité (10a, 10b) pour supporter un engrenage de sortie (19) connecté à l'élément de sortie (C₃),
la paroi opposée du carter (10) de transmission, opposée à chaque servomécanisme hydraulique, étant la paroi intermédiaire (10c) du carter de transmission, et
les éléments de réaction formant des lignes de transmission de forces axiales pour transmettre individuellement les forces axiales à la paroi intermédiaire (10c) du carter de transmission.

2. Transmission automatique selon la revendication 1, dans laquelle les éléments de réaction forment des lignes de transmission de forces axiales indépendantes l'une de l'autre pour les embrayages d'entrée individuels (C-1, C-2).

3. Transmission automatique selon la revendication 1 ou 2,
dans laquelle le mécanisme de changement de vitesses (M) incluant un engrenage planétaire est disposé entre la paroi intermédiaire (10c) et la première paroi d'extrémité,
dans laquelle les éléments de réaction comportent le mécanisme de changement de vitesses (M) et l'arbre d'entrée (14), et
dans laquelle la force axiale est transmise du premier embrayage d'entrée (C-1) à la paroi intermédiaire (10c) via le mécanisme de changement de vitesses (M) incluant l'engrenage planétaire et du second embrayage d'entrée (C-2) à la paroi d'extrémité via l'arbre d'entrée (14).

4. Transmission automatique selon la revendication 1 ou 2,
dans laquelle le mécanisme de changement de vitesses (M) incluant un engrenage planétaire est disposé entre la paroi intermédiaire (10c) et la première paroi d'extrémité,
dans laquelle les éléments de réaction comportent l'arbre d'entrée (14), et
dans laquelle la force axiale est transmise du second embrayage d'entrée (C-2) à la paroi intermédiaire (10c) pas à travers le mécanisme de changement de vitesses (M) et du premier embrayage d'entrée (C-1) à la paroi d'extrémité via l'arbre d'entrée (14).

5. Transmission automatique selon la revendication 1 ou 2,
dans laquelle les mécanismes de changement de vitesses (M) incluant individuellement des engrenages planétaires sont disposés séparément entre la paroi intermédiaire (10c) et la première paroi d'extrémité (10a) et entre la paroi intermédiaire (10c) et l'autre paroi d'extrémité (10b),
dans laquelle les éléments de réaction comportent les mécanismes de changement de vitesses (M), et
dans laquelle la force axiale est transmise à la paroi intermédiaire (10c) via les mécanismes de changement de vitesses (M) incluant individuellement les engrenages planétaires.

6. Transmission automatique selon la revendication 3,
dans laquelle le premier embrayage d'entrée (C-1) est appliqué pour un rapport faible et/ou un rapport en prise directe tandis que le second embrayage d'entrée (C-2) est appliqué pour un rapport élevé.

7. Transmission automatique selon la revendication 3,
dans laquelle le premier embrayage d'entrée (C-1) est appliqué seulement pour établir un rapport faible et/ou un rapport en prise directe.

8. Transmission automatique selon l'une quelconque des revendications précédentes,
dans laquelle le mécanisme de changement de vitesses (M) est un train d'engrenages pour établir tous les rapports de marche avant ainsi que le rapport de marche arrière uniquement avec les premier et second embrayages d'entrée (C-1, C-2).

9. Transmission automatique selon la revendication 3,
dans laquelle les éléments de réaction comportent deux parties de bride (56, 66) pour recevoir les forces axiales provenant des embrayages d'entrée individuels (C-1, C-2) et pour transmettre la force de rotation de l'arbre d'entrée (14) aux embrayages d'entrée individuels (C-1, C-2), et
dans laquelle la partie de bride (66) du côté du second embrayage d'entrée (C-2), au niveau de laquelle est transmise la force axiale via l'arbre d'entrée (14) à la paroi d'extrémité (10a), est rendue axialement immobile par rapport à l'arbre d'entrée (14) tandis que la partie de bride (56) du côté du premier embrayage d'entrée (C-1), au niveau de laquelle est transmise la force axiale via le mécanisme de changement de vitesses (M) à la paroi intermédiaire (10c), est axialement connectée de manière mobile à l'arbre d'entrée (14).

10. Transmission automatique selon la revendication 9,
dans laquelle la puissance transmise à la transmission automatique est transmise du côté où est disposé le second embrayage d'entrée (C-2) à l'arbre d'entrée (14), et
dans laquelle afin de transmettre la force axiale provenant du second embrayage d'entrée (C-2), l'arbre d'entrée (14) du côté plus proche de la paroi d'extrémité (10a) que la partie de bride (56) du premier embrayage d'entrée (C-1) est réduit radialement pour former un épaulement (14a) de telle sorte que le chemin de roulement (59a) du roulement (59) pour transmettre la force axiale à la paroi d'extrémité (10a) est maintenu en appui contre l'épaulement (14a).

11. Transmission automatique selon l'une quelconque des revendications 1 à 10,
dans laquelle la puissance transmise à la transmission automatique (T) est transmise du côté où est disposé le second embrayage d'entrée (C-2) à l'arbre d'entrée (14), et
dans laquelle la paroi d'extrémité (10a) comporte une portée annulaire (10a') pour supporter l'arbre d'entrée (14) de sorte que la circonférence extérieure de la portée (10a') constitue une face de paroi de cylindre du servomécanisme hydraulique du premier embrayage d'entrée (C-1) tandis que la face d'extrémité de la portée (10a') constitue une partie d'appui du roulement (59) pour transmettre la force axiale à la paroi d'extrémité (10a).

12. Transmission automatique selon l'une quelconque des revendications 1 à 11,
dans laquelle le mécanisme de changement de vitesses (M) comporte une pluralité d'engrenages planétaires de sorte qu'une pluralité de butées sont disposées dans les mêmes positions radiales que celles des roues solaires (S1, S2, S3) des engrenages planétaires (M1, M2, M3), et
dans laquelle la force axiale du premier embrayage d'entrée (C-1) est transmise, via les butées, à la paroi intermédiaire (10c).

13. Transmission automatique selon l'une quelconque des revendications 1 à 12,
dans laquelle l'engrenage de sortie (19) est supporté sur la paroi intermédiaire (10c) grâce au roulement, et
dans laquelle l'engrenage de sortie est connecté à l'élément de sortie du mécanisme de changement de vitesses (M) de telle manière que la force axiale provenant du premier embrayage d'entrée (C-1) peut être transmise à la paroi intermédiaire (10c).

14. Transmission automatique selon la revendication 13,
dans laquelle l'engrenage de sortie (19) est un engrenage hélicoïdal de sorte que la direction d'une force de poussée devant être établie au moment de l'entraînement par l'engrenage hélicoïdal est dirigée contre la force axiale provenant du premier embrayage d'entrée (C-1).

15. Transmission automatique selon la revendication 13 ou 14,
dans laquelle la paroi intermédiaire (10c) comporte une partie cylindrique (10a") qui s'étend dans la direction axiale et supporte l'engrenage de sortie (19) sur sa circonférence extérieure.

16. Transmission automatique selon l'une quelconque des revendications 3 à 15,
dans laquelle le mécanisme de changement de vitesses (M) comporte un frein à ruban pour retenir un de ses éléments rotatifs, déterminé au préalable, sur le carter (10) de transmission,
dans laquelle le tambour du frein à ruban est supporté axialement par l'arbre d'entrée (14), et
dans laquelle le premier embrayage d'entrée (C-1) n'est appliqué que pour un rapport dans lequel le frein à ruban n'est pas appliqué.
